# EUROPÄISCHE PATENTSCHRIFT

(11) **EP 4 210 932 B1**
(45) Veröffentlichungstag und Bekanntmachung des Hinweises auf die Patenterteilung: **04.06.2025**
(21) Anmeldenummer: 21762655.5
(22) Anmeldetag: 11.08.2021
(51) Int. Cl.: B29C 65/20, E06B 3/22, E06B 3/96

(54) **VERFAHREN UND VORRICHTUNG ZUM VERSCHWEISSEN VON WENIGSTENS ZWEI PROFILEN FÜR FENSTER- ODER TUERRAHMEN BZW. -FLUEGELN**
METHOD AND DEVICE FOR WELDING AT LEAST TWO PROFILED SECTIONS FOR WINDOW OR DOOR FRAMES OR LEAVES
PROCÉDÉ ET DISPOSITIF DESTINÉ AU SOUDAGE D'AU MOINS DEUX SECTIONS PROFILÉES SERVANT AUX CADRES DE FENÊTRE OU DE PORTE OU AUX BATTANTS

(30) Priorität: 07.09.2020 DE 102020123272
(43) Veröffentlichungstag der Anmeldung: 19.07.2023
(73) Patentinhaber: ROTOX Holding GmbH & Co. KG, 65611 Brechen (DE)
(72) Erfinder:
(74) Vertreter: Weckenbrock, Matthias
(86) Internationale Anmeldenummer: PCT/EP2021/072354
(87) Internationale Veröffentlichungsnummer: WO 2022/048872

(56) Entgegenhaltungen:
- EP-A1- 3 117 981
- EP-A2- 0 264 052
- WO-A1-2013/132406
- DE-A1- 102015 013 439
- DE-A1- 2 009 992

## Beschreibung

Die Erfindung betrifft ein Verfahren zum Verschweißen von wenigstens zwei Profilen für Fenster- oder Türrahmen bzw. -flügeln nach dem Oberbegriff des Anspruchs 1 sowie eine Vorrichtung zum Verschweißen von wenigstens zwei Profilen nach dem Oberbegriff des Anspruchs 11.

Verfahren und Vorrichtungen in der eingangs genannten Art sind beispielsweise aus der DE 10 2015 107 121 A1 bekannt und werden insbesondere zum Verschweißen von PVC-Profilstäben zu Werkstücken in Form von Fenster- oder Türrahmen oder -flügeln verwendet. Hierzu werden die Profilstäbe vor dem Verschweißen auf jeweils erforderliche Längen abgelängt, um die Profilteile bzw. Profile anschließend an den die Fügeflächen bildenden Schnittflächen durch Verschweißen miteinander zu verbinden. Die Profilteile können erforderlichenfalls auf Gehrung geschnitten werden, so dass die Gehrungsschnittflächen die Fügeflächen bilden.

Das eigentliche Verschweißen der Profilteile im Sinne der vorliegenden Erfindung erfolgt durch Anschmelzen und anschließendes Fügen der Fügeflächen an den Profilstabenden. Hierzu werden die zu verschweißenden Profilteile zunächst in eine entsprechende Spannvorrichtung eingelegt und mit Hilfe von Anschlägen und Führungen in der Vorrichtung zueinander positioniert. Daraufhin werden die Fügeflächen in einem Anschmelzschritt gegen die Heizfläche eines Heizelementes der Schweißvorrichtung gedrückt. Bei dem dabei stattfindenden Anwärm- und Angleichschritt wird Material des jeweiligen Profilteils an dessen Fügefläche geschmolzen, so dass die für die Schweißverbindung erforderliche Schmelze, also durch Wärmeeinwirkung flüssig oder teigig gewordenes Material, entsteht. Durch das Andrücken der Fügefläche an das Heizelement, das sog. Angleichen, werden ggf. auf den Fügeflächen vorhandene Unebenheiten mit abgeschmolzen.

Beim anschließenden Umstellen wird das Heizelement zwischen den Profilteilen entfernt, bevor diese gefügt werden. Das Fügen erfolgt durch in Kontakt bringen und Stauchen beider Profiteile, wobei die angeschmolzenen Fügeflächen in Fügerichtung aufeinander zubewegt und gegeneinander gepresst werden. Der noch heiße, vorzugsweise thermoplastische Werkstoff der beiden Profilteile, die Schmelze, kommt dabei in Kontakt und bildet nach dem Erkalten eine stabile Schweißverbindung. Ein solcher Verfahrensablauf ist beispielsweise in der DE 10 2012 112 533 A1 beschrieben.

Die Fügepartner selbst sind um ein Übermaß länger als das spätere Fertigmaß der verbundenen Elemente des Werkstückes. Zur Bildung der Schmelze wird ein Teil dieses Übermaßes, der sogenannte Abbrand, an dem Heizelement abgeschmolzen. Ein anderer Teil des Übermaßes erweicht während des Anschmelzschrittes und wird in dem anschließenden Fügeschritt auf das vorgesehene Endmaß gestaucht. Das Verhältnis des Übermaßes hinsichtlich des Abschmelzens und Stauchens ist variabel. Der Abbrand kann je nach verwendeter Profilart größer oder kleiner gewählt werden, um stets ausreichend Schmelze für eine zuverlässige Schweißverbindung zur Verfügung zu stellen.

Während des Anschmelzschrittes an dem Heizelement beginnt das Material des Profilteils an der Fügefläche, beispielsweise PVC, zu fließen und sich zu verformen. Hierbei bewegt sich die Schmelze, die durch das Andrücken des Profilteils an den Heizspiegel verdrängt wird, auch seitlich nach außen über den Rand der Fügefläche bis auf die Außenflächen, insbesondere auf die Sichtflächen des Profilteils hinaus.

Die Sichtflächen des Profilteils sind diejenigen äußeren Flächen, die im fertigen und eingebauten Zustand des Werkstückes sichtbar sind. Bei Fenstern oder Türen sind dies die in der Fenster- oder Türebene sichtbaren Flächen der einzelnen Profilteile. An den sich in der Regel quer oder senkrecht zu den Sichtflächen erstreckenden Funktionsflächen der Profilteile können Befestigungselemente, bspw. Beschläge, oder andere Werkstückelemente, bspw. Fensterscheiben, angeordnet und befestigt werden.

Bei bekannten Verbindungsverfahren erkaltet während des Fügens der als überschüssige Schmelze nach außen tretende Werkstoff der Profilteile und bildet an der Verbindungsstelle der Profilteile eine Schweißraupe aus. Eine solche Schweißraupe auf Außenflächen des Profilteils, insbesondere auf den Sichtflächen steht jedoch der Maßhaltigkeit des Werkstückes sowie einem hochwertigen Qualitätseindruck entgegen. Daher wird die Schweißraupe nach einer gewissen Abkühlzeit in Nachfolgemaschinen, beispielsweise Verputzmaschinen entfernt, bspw. durch Fräsen von Schattennuten oder durch bündiges Abstechen entlang der Verschweißung.

Mittlerweile werden auch folierte bzw. laminierte Profile zur Herstellung von Fenster-und Türrahmen bzw. -flügeln verwendet, um diese auf einfache Weise mit unterschiedliche Farben oder Dekoren auszustatten. Bei derartigen Profilen gestaltet sich die notwendige Nachbearbeitung von Schweißraupen im Fügebereich schwierig, da die dünnen Folien bzw. Laminatschichten durch eine mechanische Bearbeitung leicht beschädigt werden können. Insbesondere bei automatisierten oder teilautomatisierten Abläufen kann so ein erhöhter, kostentreibender Ausschuss entstehen.

Durch das Entfernen der Schweißraupe wird der darunterliegende, von der Folie oder der Laminierung farblich abweichende Grundwerkstoff des Profilteils sichtbar, der von Hand in einer entsprechenden Farbe kaschiert werden muss.

Seit einigen Jahren wird die fertigungstechnische Idealvorstellung verfolgt, eine Verschweißung von Profilen, insbesondere von solchen mit einem Dekor zu erreichen, die in optisch ansprechenden Sichtflächen resultiert, wobei keine über die Sichtfläche nach außen tretende Schweißnaht entstehen soll, die entgratet und/oder nachgefärbt werden muss.

Lösungsansätze des jüngeren Stands der Technik beabsichtigen, die Entstehung einer äußeren Schweißraupe von vornherein zu verhindern, indem das Fließen der Schmelze vor und/oder während des Fügens gezielt beeinflusst wird. Beispielsweise kann das jeweilige Profil dazu mit Begrenzungselementen, wie zum Beispiel Begrenzungsmessern, eingeengt werden, um das Austreten von Schmelze über die Sichtflächen zu verringern oder zu verhindern. Dies ist beispielsweise in den Druckschriften DE 20 2015 000 908 U1, DE 10 2015 107 121 A1, DE 10 2016 102 240 A1 und DE 10 2016 104 785 A1 vorgeschlagen. Zum Teil weisen diese Vorrichtungen Formteile auf, die vor und/oder während des Anschmelzschrittes zur Beeinflussung der Schmelze bewegt werden können. Dabei soll entweder verhindert werden, dass Schmelze nach Außen tritt und/oder bereits nach außen getretene Schmelze zurück zur bzw. auf die Fügefläche des jeweiligen Profils bewegt werden, so dass beim anschließenden Fügen eine Schweißraupe erst gar nicht entsteht.

Ein hierbei auftretendes Problem sind Verunreinigungen der Schmelze beispielsweise mit Schmutzpartikeln, welche sich durch die Lagerung der Profile auf der Profilrandschicht angesammelt haben könnten, sowie aufgeschmolzenem Material der Schutzfolien. Diese befinden sich auf den Sichtflächen der Profile und dienen dem Schutz vor Transportschäden sowie der Einwirkung von Baustoffen und werden vor dem Anschmelzschritt, bei den Lösungsansätzen des jüngeren Standes der Technik, in einem zusätzlichen Arbeitsschritt lokal entfernt.

Trotz dieser zusätzlichen Maßnahmen verbleibt dennoch oftmals ein Spalt zwischen dem jeweiligen Begrenzungselement und dem Profilteil, durch den Schmelze fließen kann, so dass das Auftreten einer Schweißraupe nicht immer zuverlässig zu unterdrücken ist. Nach dem Abkühlen müssen auftretende Schweißraupen daher weiterhin in einem zusätzlichen Arbeitsschritt entfernt werden. Der Fertigungsaufwand und die Fertigungskosten lassen sich somit nicht in dem gewünschten Maße reduzieren.

Aus der DE 10 2018 133 638 A1 ist eine Vorrichtung und ein Verfahren für das Verschweißen zweier, aus Kunststoff bestehender Profilstäbe bekannt. Nach dem Bereitstellen der Profilstäbe erfolgt eine Bearbeitung zumindest eines Profilstabes, insbesondere in seinem Gehrungsbereich, mit einem Abstechmesser. Vor dem Erwärmen soll der Profilstab von einem Fräser, insbesondere einem Planfräser bearbeitet werden. Hiernach erfolgt ein Erwärmen der Profilstäbe zumindest an ihren Gehrungsflächen und abschließend ein Zusammenbringen der Gehrungsfläche der Profilstäbe so, dass die erwärmten Bereiche der Gehrungsflächen eine materialschlüssige Verbindung zwischen den Profilstäben ergibt.

Aus der EP 3 403 809 A1 ist ein Verfahren zum Verschweißen von mindestens zwei Profilen zur Bildung eines Rahmenteils bekannt. Die Schweißflächen der Profile werden mittels einer Heizeinheit erwärmt. Es erfolgt eine Relativbewegung zwischen der Heizfläche und mindestens einer Schweißfläche in einer Schweißebene, die im Wesentlichen parallel zur mindestens einen Schweißfläche verläuft.

Aus der EP 3 403 810 A1 ist ebenfalls ein Verfahren zum Verschweißen von mindestens zwei Profilen zur Bildung eines Rahmens bekannt. Die Schweißflächen der Profile werden mittels einer Heizeinheit erwärmt. Weiterhin übt eine Druckeinheit einen Druck auf die Profile in ihrem jeweiligen Schweißabschnitt aus, insbesondere an den Grenzflächen der Profile und der Heizplatte.

Aus der EP 0 264 052 A2 ist ein Verfahren zum Verschweißen von Kunststoffprofilen bekannt, wobei vor dem Verschweißen die Enden der beiden Kunststoffprofile derart profiliert werden, dass jeweils zwei Bereiche entstehen. Der erste Bereich besitzt eine vordere Endfläche, die vom Schweißspiegel erwärmt wird, während der sich daran anschließende zweite Bereich eine abgeschrägte Endfläche aufweist. Beim Verschweißen soll auf diese Weise nur an der Seite des ersten Bereiches eine Schweißraupe entstehen, während an der Seite des zweiten Bereiches eine Schweißraupenbildung unterbleiben soll.

Auch die WO 2013/132 406 A1 betrifft ein Verfahren zum Schweißen von Profilelementen aus Kunststoffmaterial.

Aus der DE 20 09 992 A1 geht eine Kunststoff-Schweißmaschine mit einem an einer Säule höhenbeweglich vorgesehenen Schweißspiegel und diesem zugeordnete, mit Spanneinrichtungen für Kunststoffprofile versehenen Führungen hervor, welche sich an der Schweißstelle begegnen. An der Säule ist eine aus mehreren Schenkeln bestehende drehbare Arm-Anordnung und am Ende jedes Schenkels ein Schweißspiegel anderer Profilierung vorgesehen.

Die DE 10 2015 013 439 A1 bezieht sich auf ein Verfahren zum Verschweißen von zwei hohlen Profilstäben aus Kunststoff zur Bildung eines Fensterrahmens, bei dem die miteinander zu verbindenden Profilstäbe durch Einfügen eines Schweißspiegels zwischen deren Verbindungsflächen und Anpressen derselben an den Schweißspiegel unter Bildung eines Schweißwulstes auf eine vorgegebene Temperatur erhitzt und nach dem Entfernen des Schweißspiegels bei gleichzeitiger Vergrößerung des Schweißwulstes unter Druck zusammengefügt werden.

Nachteilig beim Stand der Technik ist es, dass sich mögliche Verunreinigungen auf der Profiloberfläche beim Schmelzprozess noch auf der Oberfläche befinden und in die Schmelze und somit in die Fügezone gelangen können, was sich nachteilig auf die Eckenfestigkeit der Fügeverbindung und die Optik des späteren Fenster- oder Türrahmens auswirkt.

Vor diesem Hintergrund liegt der Erfindung die Aufgabe zugrunde, ein Verfahren und eine Vorrichtung anzugeben, mittels welcher die Eckenfestigkeit der gefügten Profile erhöht werden kann. Ferner soll die Optik des Fügebereiches des Tür- oder Fensterrahmens bzw. -flügels weiter verbessert werden.

Diese Aufgabe wird gelöst mit einem Verfahren nach Anspruch 1 sowie einer Vorrichtung nach Anspruch 11.

Es werden also zunächst die wenigstens zwei Profile bereitgestellt, welche an Fügeflächen der Profilenden miteinander verbunden werden. Die Heizeinheit mit wenigstens zwei Heizelementen wird zwischen die zu fügenden Profilenden positioniert.

Für eine ansprechende Optik und eine hohe Eckenfestigkeit müssen die Sichtflächen am Gehrungsschnitt bearbeitet werden. Hierzu werden die Profilenden angefast, insbesondere wird eine Profilrandschicht, beispielsweise die Dekor-/Schutzfolie oder weitere Verunreinigungen, beispielsweise durch Transport und Lagerung, in diesem Bereich abgetragen. Dies geschieht durch das wenigstens eine an den Heizelementen der Heizeinheit angeordnete Werkzeug, insbesondere mittels wenigstens eines Schneidmessers. Aus diesem Grund weist die Heizeinheit wenigstens zwei Heizelementen auf, an welchen jeweils ein Werkzeug, beispielsweise Schneidmesser angeordnet ist.

Das Entfernen der Profilrandschicht mit ihren Verunreinigungen und/oder der Dekor-/Schutzfolie ist deshalb von Bedeutung, um eine optimale Festigkeit der Schweißverbindung zu erreichen. Denn die Dekor-/Schutzfolie kann zu einer Nichthaftung der Profilenden beim Fügeverfahren führen. Ebenfalls können sich durch die Verunreinigungen Partikel/Stoffe in der Schmelze einlagern, welche für die Schweißverbindung nachteilig sind.

Insbesondere kann vorgesehen sein, dass zum sicheren Entfernen der Dekor-/Schutzfolie die Abtragtiefe am Profil in Gehrungsrichtung gesehen das gleiche Maß aufweist, wie mindestens der Schmelzendweg beim Schmelzprozess. Das Stauchrestmaß kann dagegen unbearbeitet bleiben.

Die Geometrie des mechanisch abgetragenen Spans wird als eine Schräge (Fase) ausgelegt. Das hat zum einen den Vorteil, dass weniger Material abgetragen wird, was zur Erhöhung der Eckfestigkeit führt, da mehr Materialvolumen zur Verfügung steht. Zum anderen wird im Schmelzprozess die Fließrichtung des Schmelzgutes besser in die notwendige Richtung geführt, d.h. in das Profilinnere bzw. die Profilkammern.

Nach dem Anfasen, d.h. dem Abtragen der Profilrandschicht werden die miteinander zu fügenden Profilenden auf die Heizeinheit zugestellt und an ihren späteren Fügeflächen mittels wenigstens einer an den Heizelementen angeordneten Heizfläche angeschmolzen.

Unter dem Anschmelzschritt ist das Andrücken der Profile an das Heizelement, bspw. einen Heizspiegel, gemeint, wobei der an der Fügefläche befindliche Werkstoff des Profils durch das Anwärmen an- bzw. abgeschmolzen wird. Das Profil wird dabei um den sogenannten Abbrand, also um das flüssig bzw. teigig werdende und unter dem Einfluss der Andruckkraft seitlich ausweichende Material des Profils kürzer. Da die Fügefläche des Profils gegen das meist ebene Heizelement gedrückt wird, werden eventuell an der Fügefläche des Profils befindliche Unebenheiten an- oder sogar ausgeglichen. Die seitlich ausweichende Schmelze tritt in den Bereichen, in welchen ein Begrenzungselement an der Außenfläche des Profils an und/oder aufliegt, über die Trennkante hinaus und kühlt dort schneller ab als an der Fügefläche. Dieser zur Herstellung der Schweißverbindung nicht erforderliche Anteil der Schmelze wird als Schmelzüberschuss bezeichnet.

Der insbesondere an den Sichtflächen austretende Schmelzüberschuss kann bei farbig folierten oder laminierten Profilen neben dem Grundwerkstoff des Profils auch Anteile aus der aufgeschmolzenen Dekorfolie oder Dekorschicht enthalten. Diese kann unterschiedliche Materialien enthalten, die in ihren Eigenschaften von dem Grundwerkstoff des Profils abweichen können. Der Grundwerkstoff des Profils besteht in der Regel aus einem thermoplastischen Kunststoff, wie bspw. PVC, derjenige der Dekorfolie oder Dekorschicht z.T. aus anderen Kunststoffen. Eine Dekorfolie kann beispielsweise aus einer pigmentierten und/oder mit Druckfarbe beschichteten PVC-Halbhartfolie bestehen, die zum Schutz vor Witterung mit einer transparenten Acrylatfolie laminiert sein kann.

Außerdem können in dem Schmelzüberschuss Anteile aus aufgeschmolzener Schutzfolie enthalten sein. Die Schutzfolie kann aus einem anderen Material, wie beispielsweise LDPE, bestehen und ist mittels eines Klebers auf den Profilen lösbar befestigt. Zusätzlich können durch die Herstellung, den Transport und/oder die Lagerung der Profile Verunreinigungen wie z.B.: Staub- und Schmutzpartikel vorhanden sein, welche in die Verbindungsfläche gelangen können. Die Profile sind an den Sichtflächen in der Regel zum größten Teil mit Schutzfolien belegt, um Beschädigungen der Profile sowie der daraus hergestellten Werkstücke bei Transport und Einbau zu vermeiden. Die Schutzfolie reicht in der Regel in den Bereich des Schmelzüberschusses hinein, sofern sie nicht in einem vorherigen Arbeitsschritt entfernt wurde.

Um nun dieses für die Eckenfestigkeit nachteilige Vermischen der Schutz-, Dekorfolie und/oder Verunreinigungen mit dem Schmelzüberschuss zu vermeiden, wird das Profil in einem vorgelagerten Verfahrensschritt angefast, insbesondere wird die Profilrandschicht der Profilenden vorzugsweise mindestens bis zum Schmelzweg entlang ihrer Sichtflächen abgetragen.

Ein Vorteil der Erfindung liegt insbesondere darin, dass die in dem Schmelzüberschuss enthaltenen Verunreinigungen sowie durch die bereits stärker abgekühlten und nur noch als teigige Masse vorliegenden Schmelzeanteile nicht mehr mit der zum eigentlichen Fügen erforderlichen Schmelze vermischt werden. Die Schweißverbindung erhält so eine hohe Güte. Untersuchungen haben gezeigt, dass sich auf diese Weise die Festigkeitswerte von Eckverbindungen stark gegenüber den bekannten Eckverbindungen erhöhen lässt, bei denen eine Schweißraupe ebenfalls vermieden werden soll. Aufwändige Nachbearbeitungen gerade an den Sichtflächen der Profile können damit auf ein Minimum reduziert oder sogar vollständig vermieden werden. Dies sogar dann, wenn auf das vorherige lokale Entfernen der Schutzfolie verzichtet wird.

Nach dem Anschmelzen werden die Heizelemente derart bewegt, dass das Schmelzgut in das Profilinnere bzw. in das Innere der Profilkammern der Profile verdrängt wird, um eine ansprechende Optik der Fügestelle zu gewährleisten.

Wesentlich bei der Erfindung ist, dass die Heizeinheit mehrgeteilt ist, denn auf diese Weise kann das Schmelzgut von den Sichtflächen in einfacher Weise nach innen in die Profilkammern verdrängt werden. Im Rahmen der Erfindung ist es auch denkbar, dass das Heizelement auch mehrgeteilt ist, d.h. aus mehr als zwei Teilen besteht, um noch mehr Schmelzgut gezielt in die Innenkammern zu lenken, z.B.: von vorne nach hinten, von hinten nach vorne, von oben nach unten und von unten nach oben.

Nach dem Herausnehmen der Heizeinheit zwischen den zu fügenden Profilenden können Formleisten zwischen Begrenzungsmesser zum Umformen und/oder Verdrängen des Schmelzgutes eingebracht werden. Die Formleisten dienen zur Verformung der Profilkante, was zum einen vorteilhaft für die Optik ist, auch zum Ausgleich von Profiltoleranzen. Zum anderen wird verhindert, dass während des Fügeprozesses Schmelzgut nach oben aus der Schichtfläche austritt.

Mittels Formleiste kann die die Fügefläche nach außen begrenzende Profilkante des jeweiligen Profils zumindest abschnittsweise nach innen in Richtung zur Fügefläche verformt werden. Der Profilkante, also der Rand der Fügefläche, soll hierdurch eine "Ausrichtung" aufgeprägt werden, in welche sie beim anschließenden Fügeschritt und dem dabei vorgenommenen Stauchen verdrängt wird. Die Profilkante bewegt sich während des Stauchens nach innen zur Fügefläche hin, so dass quasi automatisch eine sogenannten "Schattennut" bzw. V-Nut an der Verbindungsstelle entsteht und gleichzeitig einem sichtbaren Austritt von Grundmaterial, das unter der Farbschicht an der Profiloberfläche liegen kann, entgegenwirkt wird. Eventuell bestehende Höhenunterschiede zwischen den aneinandergefügten Profilteilen können auf diese Weise kaschiert bzw. optisch ausgeglichen werden.

Mittels der Formleisten kann die Art und Ausprägung der Nachbearbeitung bedarfsgerecht angepasst werden. Denkbar ist auch, dass die Formleisten gleichzeitig beide Profile bearbeiten.

Grundsätzlich kann eine Bearbeitung durch die Formleisten derart erfolgen, dass sowohl die jeweilige Profilkante der Profile mittels Formleiste vor dem Fügeschritt verformt als auch während oder nach Beendigung des Fügeschrittes der sich durch die Schweißnaht ergebenden Fügelinie eine Form aufgeprägt wird. Hierbei kann die Formleiste zur Verformung der Profilkanten auf die Enden der Profile zu gefahren werden, um die Profilkanten zu verformen. Anschließend kann die Formleiste in dieser Stellung belassen werden, während die Profilenden im Fügeschritt aufeinander zu bewegt und dabei zur Bildung der Schweißverbindung gestaucht werden. Die auf die sich dabei ergebende Fügelinie aufgeprägte Form ergibt sich aus der Form der Bearbeitungsflächen der Formleiste, die beim Stauchen mit dem Profil in Verbindung stehen.

Es ist aber auch denkbar, dass die Bearbeitung durch die Formleisten aber auch zweistufig erfolgt. Insbesondere kann es vorgesehen sein, dass die Nachbearbeitung in der Weise erfolgt, dass die jeweilige Profikante der Profile in einer ersten Bearbeitungsstufe vor dem Fügeschritt mittels Formleiste verformt wird. In einer zweiten Bearbeitungsstufe, die während oder nach Beendigung des Fügeschritts, also des Stauchens erfolgt, kann der sich durch die Schweißnaht ergebenden Fügelinie mittels Formleiste eine Form aufgeprägt werden. Hierzu kann die Formleiste zurückgezogen und nochmals auf die Fügestelle zu bewegt werden. Zum Beispiel kann hier eine V-förmige Nut aufgeprägt werden.

Die Formleiste kann dazu verwendet werden, während des Fügeschritts ein Fließen von Schmelzgut in Richtung der Sichtfläche zu begrenzen. Dies kann beispielsweise dazu genutzt werden, der sich durch die Schweißnaht ergebenden Fügelinie eine bestimmte Gestalt aufzuprägen, bspw. die bereits erwähnte V-förmige Nut.

Schließlich werden die Profilenden gegeneinander gestaucht, so dass die Profile miteinander gefügt werden. Mit anderen Worten werden die Profile in einem Fügeschritt mit den angeschmolzenen Fügeflächen so lange gegeneinander gepresst, bis die dort miteinander in Kontakt gebrachte Schmelze unter Ausbildung einer Schweißverbindung abkühlt und sich verfestigt.

Der Bereich bzw. Punkt, bis zu welchem das Profil angeschmolzen wird, wird auch als Schmelzendpunkt bezeichnet. Da an dieser Stelle während des Fügeschrittes auch der Stauchvorgang beginnt, wird derselbe Bereich auch als Stauchweganfang bezeichnet. Dem gegenüber in Füge- bzw. Stauchrichtung zurückversetzt, liegt der sogenannte Fügeendpunkt bzw. das Stauchwegende. Während des Stauchens wird das jeweilige Profil bis zum Fügeendpunkt verkürzt.

Das erfindungsgemäße Verfahren dient also einerseits zur Erhöhung der Eckfestigkeit der gefügten Profile und andererseits hat das Verfahren einen positiven Einfluss auf die Optik der Sichtflächen, die aus dem Schmelz- und Stauchprozess resultieren. Die Dekor-/Schutzfolie muss nicht aufwendig vor dem Fügeprozess händisch entfernt werden.

Gemäß einer ersten vorteilhaften Ausgestaltung des erfindungsgemäßen Verfahrens wird eine Relativbewegung zwischen jedem Heizelement und mindestens einer Fügefläche in einer Fügeebene ausgeführt, die im Wesentlichen parallel zu der wenigstens einen Fügefläche ist. Dies hat den Vorteil, dass durch die Relativbewegung des Heizspiegels über die ganze Gehrungsfläche hinweg der Schmelzweg nicht verändert wird, insbesondere geht der Kontakt der Fügefläche mit dem Heizelement nicht verloren.

Bevorzugt werden die beiden Heizelemente der Heizeinheit horizontal und/oder vertikal bewegt und positioniert, insbesondere werden die beiden Heizelemente gegeneinander und/oder in Richtung von der Innenzur Außenecke der gefügten Profile bewegt. Mit anderen Worten werden die beiden Heizelemente zueinander und nach "hinten" bewegt. Bei einer Ausführung, bei der die Heizspiegeleinheit zwei Heizelemente aufweist, kann jeder Teil der beiden Heizelemente mittels Motor in der vertikalen Richtung bewegt werden. Die komplette Heizspiegeleinheit kann mittels Motor in der Horizontalen bewegt werden. Mittels einer Steuerung können diese Bewegungen überlagert und somit interpoliert werden.

Nach einer anderen Ausführungsform ist es möglich, dass jedes Heizelement wenigstens zwei Heizflächen aufweist, welche jeweils einer Fügefläche eines zu fügenden Profilendes zugeordnet sind. Auf diese Weise können die zwei zu verbindenden Gehrungsflächen gleichzeitig bearbeitet werden.

Gemäß einer vorteilhaften Weiterbildung der Erfindung werden die horizontale und/oder die vertikale Bewegung jedes Heizelements unabhängig voneinander angesteuert. Die Profile können auf der Ober- und Unterseite verschieden ausgestaltet sein, so dass durch die unabhängige Steuerung jedes Heizelements jede Seite individuell bearbeitet werden kann. Auch können bei Bedarf Profile nur einseitig bearbeitet werden. Die Unabhängigkeit der Bewegungen erhöht die Möglichkeiten und somit die Flexibilität der Vorrichtung.

Nach einer weiteren vorteilhaften Ausgestaltung des Verfahrens ist vorgesehen, dass an jedem Heizelement je ein Schneidmesser mit vorzugsweise mehreren Schneiden angeordnet ist, wobei der unteren Sichtfläche des Profilendes ein unteres Schneidmesser und der oberen Sichtfläche ein oberes Schneidmesser zugeordnet ist. Der Vorteil dieser Anordnung ist zum einen, dass die Schneidmesser über die Heizelemente erwärmt werden, so dass das Schneiden besser und einfacher funktioniert. Des Weiteren hat es einen Kostenvorteil, denn im Stand der Technik werden Motoren für die Bewegungen der Heizeinheit, sowie der Heizelemente zum Erzeugen der Relativbewegungen benötigt. Für die Schneidmesser werden auch separate Motoren zum Anfasen der Profilkontur benötigt. Dadurch, dass an jedem Heizelement je ein Schneidmesser angeordnet ist, ist die Vorrichtung kompakter und kostengünstiger, da keine separaten Motoren für die Schneidmesser benötigt werden.

Gemäß einer weiteren Variante der Erfindung besitzt die Abtragtiefe der abgetragenen Beschichtung bzw. Profilrandschicht am Profil in Gehrungsrichtung gesehen das gleiche Maß, wie mindestens der Schmelzendweg beim Schmelzprozess. Dabei kann das Stauchrestmaß unbearbeitet bleiben. Denn es wird lediglich die Beschichtung bzw. Dekor-/Schutzfolie an der Sichtfläche bis zum Schmelzwegende abgetragen. Der restliche Teil des Abbrandes, der Fügeweg oder Stauchweg wird möglichst nicht verändert bzw. so gering als möglich abgetragen. Dadurch wird das Abtragen des Materials auf ein Minimum reduziert, um die Festigkeit der Eckenverbindung nicht unnötig zu schwächen.

In einer Weiterbildung der Erfindung ist vorgesehen, dass die Profilrandschicht bis zu einer Trennbereichslinie abgetragen wird und eine Fügeendpunktlinie den Bereich kennzeichnet, bis zu welchem das Profil an seiner Profilwand während des Fügeschrittes gestaucht wird und das Profil bis zu einer Schmelzendpunktlinie angeschmolzen wird und wobei die Trennbereichslinie und die Schmelzendpunktlinie oder die Trennbereichslinie und die Fügeendpunktlinie zusammenfallen oder die Trennbereichslinie zwischen der Schmelzendpunktlinie und der Fügeendpunktlinie liegt.

In einer Weiterbildung der Erfindung wird das Schneidmesser, insbesondere mittels der Heizeinheit, beheizt. Auf diese Weise sind keine weiteren Bauteile zum Erhitzen der Schneidmesser notwendig und die Heizeinheit kann mehrfach genutzt werden, zum einen zum Anschmelzen der Profilenden und zum anderen zum Beheizen der Schneidmesser.

Die Formleiste kann vor dem Stauchvorgang der Profilenden zwischen den Begrenzungsmessern in Stellung gebracht werden. Hierdurch wird erreicht, dass kein Material nach außen dringt, wobei im Endstadium, d.h. nach Beendigung des Stauchprozesses, die Formleiste selbst sogar gegenüber den Begrenzungsmessern im Falle der oberen Sichtfläche leicht nach oben bzw. nach unten verdrängt werden kann. Hierdurch wird eine saubere Endbearbeitung der Sichtfläche im Bereich der Gehrung erreicht.

Kurz vor Stauchbeginn können die Formleisten zwischen die Begrenzungsmessern eingebracht werden um zu verhindern, dass die geschmolzene Kunststoffmasse an den Fügezonen nach außen dringen kann. Zum anderen wird das unbearbeitete Stauchrestmaß durch die Formgebung der Formleisten nach Innen geformt, was zu dem eigentlichen Endergebnis der Sichtflächenoptik führt.

In einer Weiterbildung der Erfindung sind die Heizelemente mit beschichteten, vorzugsweise teflonisierten, geriffelten und/oder verzahnten Heizplatten, insbesondere beidseitig, bestückt, um während den Heizspiegelbewegungen die geschmolzene Kunststoffmasse, die sich zwischen den Zahnlücken oder der aufgerauten Oberfläche während des Schmelzprozesses bildet, in eine definierte Richtung, d.h. in das Profilinnere bzw. die Profilkammern zu fördern.

Gemäß einem unabhängigen Gedanken der Erfindung ist ein Rahmen vorgesehen, insbesondere Fensterrahmen oder Türrahmen, der miteinander verschweißte Profilteile aufweist, dadurch gekennzeichnet, dass wenigstens eine der Schweißverbindungen gemäß einem oben beschriebenen Verfahren hergestellt ist.

Die erfindungsgemäß nach Anspruch 11 vorgeschlagene Vorrichtung zum Verschweißen von wenigstens zwei Profilen für Fenster- oder Türrahmen kann insbesondere zur Herstellung von aus thermoplastischem Kunststoff bestehenden Profilteilen zu Tür- oder Fensterrahmen bzw. -flügeln ausgebildet sein.

Die erfindungsgemäße Vorrichtung kann zudem in der Weise ausgebildet sein, dass die Heizelemente mittels Servomotoren horizontal und/oder vertikal bewegbar und positionierbar sind, insbesondere dass die beiden Heizelemente gegeneinander und/oder in Richtung von der Innen- zur Außenecke und/oder von der Außen- zur Innenecke der gefügten Profile bewegbar sind.

Erfindungsgemäß hat es sich als Vorteil erwiesen, wenn an jedem Heizelement je ein Schneidmesser mit vorzugsweise mehreren Schneiden angeordnet ist, wobei der unteren Sichtfläche des Profilendes ein unteres Schneidmesser und der oberen Sichtfläche ein oberes Schneidmesser zugeordnet ist.

Es kann wenigstens eine Formleiste zum Formen des Schmelzgutes zwischen Begrenzungsmesser einbringbar sein. Ferner ist es denkbar, dass die Formleisten zum gleichzeitigen Bearbeiten der beiden miteinander zu fügenden Profile ausgebildet sind. Hierdurch ist eine zeitsparende, synchrone Bearbeitung der Profilenden besser möglich. Ferner können die Formleisten mit nur einem Antrieb bewegt werden.

Vorzugsweise kann die Formleiste eine mit dem Profilteil in Kontakt bringbare Bearbeitungsfläche aufweisen, die zumindest abschnittsweise unter einem Winkel von größer 0° zur Fügefläche verläuft. Auf diese Weise kann ein Verformen der Profilkante nach dem Vereinzelungsschritt schonender und kontrollierter erfolgen.

Ferner ist es möglich, die Formleiste mit wenigstens einer zweiten Bearbeitungsfläche auszubilden, die sich an die erste Bearbeitungsfläche anschließt und unter einem anderen Winkel zur Fügefläche verläuft. Eine solche Ausgestaltung ermöglicht eine besonders schonende und gezielte Bearbeitung der Profilenden bzw. der Schweißnaht vor und während des Fügeschrittes.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen schematisch:
- Fig. 1: eine perspektivische Ansicht der erfindungsgemäßen Vorrichtung,
- Fig. 2: eine Schnittdarstellung der erfindungsgemäßen Vorrichtung in einer ersten Stellung vor dem Abtragen einer Profilrandschicht,
- Fig. 3: eine Schnittdarstellung der Vorrichtung gemäß Fig. 2 in einer weiteren Stellung beim Abtragen der Profilrandschicht,
- Fig. 4: eine Detailansicht gemäß Figur 3,
- Fig. 5: eine Schnittdarstellung der Vorrichtung gemäß Fig. 1 in einer weiteren Stellung bei Beginn des Schmelzprozesses,
- Fig. 6: eine Schnittdarstellung der Vorrichtung gemäß Fig. 5 in einer weiteren Stellung am Ende des Schmelzprozesses,
- Fig. 7: eine Detailansicht gemäß Figur 6,
- Fig. 8: eine Schnittdarstellung der Vorrichtung gemäß Fig. 5 in einer weiteren Stellung bei Ende des Schmelzprozesses und geöffneten Tischauflagen,
- Fig. 9: eine Schnittdarstellung der Vorrichtung gemäß Fig. 1 mit einer Formleiste kurz vor Beginn des Stauchprozesses,
- Fig. 10: eine Schnittdarstellung der Vorrichtung gemäß Fig. 9 bei bereits begonnenem Stauchprozesses,
- Fig. 11: eine Schnittdarstellung der Vorrichtung gemäß Fig. 9 in einer weiteren Stellung zum Ende des Stauchprozesses,
- Fig. 12: unterschiedliche Ausgestaltungen einer Nut,
- Fig. 13: eine Schnittdarstellung der Vorrichtung gemäß Fig. 2 in zwei weiteren Stellungen beim Abtragen der Profilrandschicht und
- Fig. 14: eine perspektivische Ansicht einer weiteren Ausführung der erfindungsgemäßen Vorrichtung gemäß Figur 1 mit Formleiste.

Gleiche oder gleichwirkende Bauteile werden in den nachfolgend dargestellten Figuren der Zeichnungen anhand mehrerer Ausführungsformen mit Bezugszeichen versehen, um die Lesbarkeit zu verbessern.

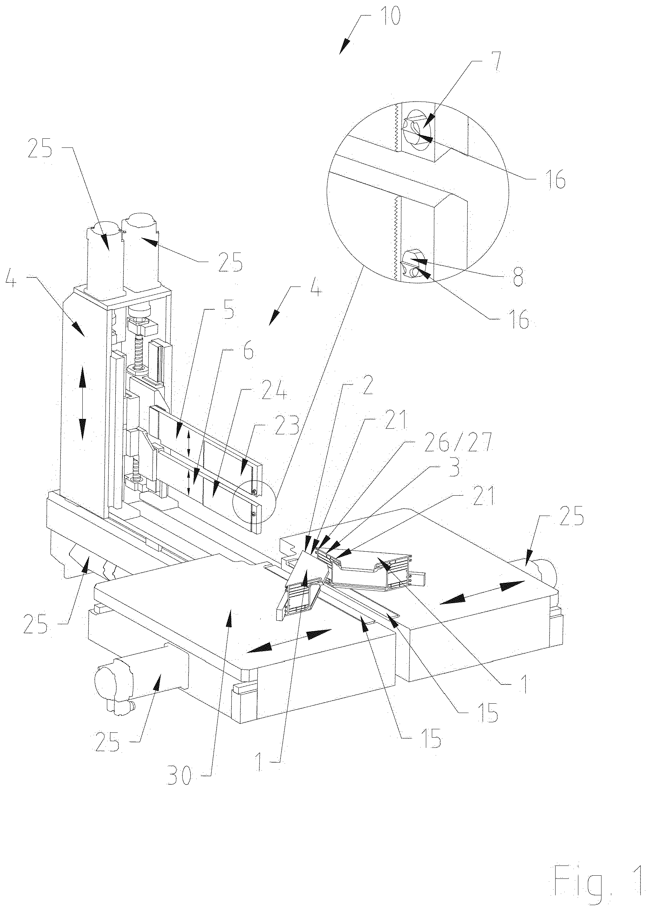

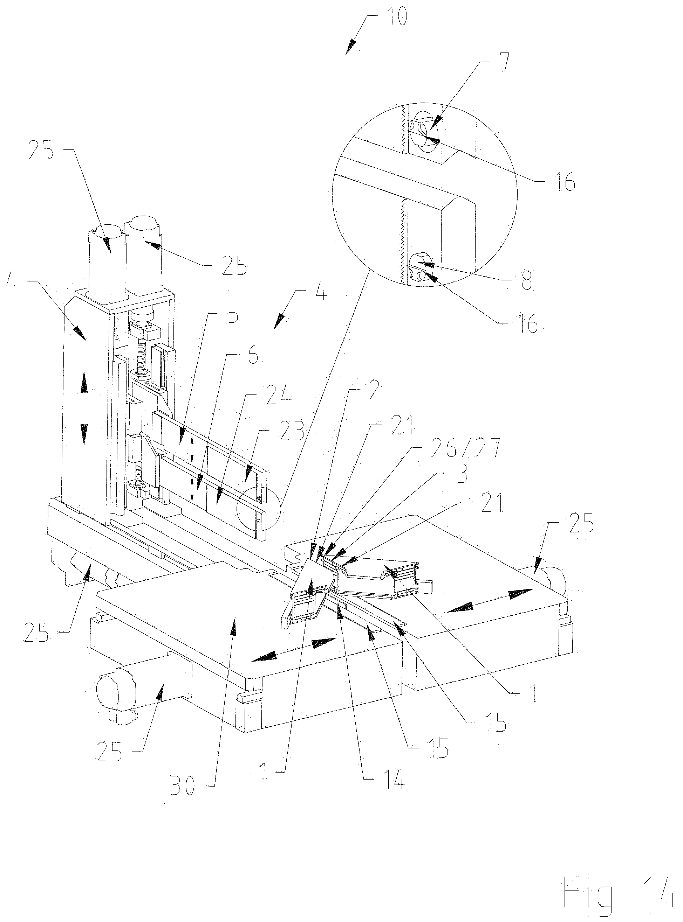

Die vorliegende Erfindung betrifft ein Verfahren und eine Vorrichtung 10 in Form einer Schweißmaschine zum Verschweißen von wenigstens zwei Profilteilen bzw. Profilen 1 für Fenster- oder Türrahmen bzw. -flügeln. In Figur 1 sowie auch in Figur 14 ist jeweils eine Übersicht auf die Vorrichtung 10 dargestellt, bei welcher die zueinander zu fügenden Profile 1 erkennbar sind, die sich dort mit ihren Fügeflächen 26, 27 gegenüberliegen. Die jeweiligen Verfahrensschritte werden in der Regel an beiden Profilen 1 gleichzeitig durchgeführt.

Das Profil 1 ist vorliegend ein aus thermoplastischem Kunststoff, bspw. PVC, gebildetes Profilelement 1 zur Herstellung eines Fenster- oder Türflügels. Das Profil 1 ist als Strangpressprofil mit mehreren parallel, quer und schräg zueinander verlaufenden Profilwänden 28 ausgebildet, deren äußerste Umrandung die Profilkante 29 bildet. Das Profil 1 weist dabei einerseits die untere 17 und die obere Sichtfläche 18 und andererseits Funktionsflächen auf, die die Außenflächen des Profils 1 bilden. Die Sichtflächen 17, 18 sind die im fertig montierten Zustand des Fensters oder der Tür nach außen sichtbaren Flächen. Die Funktionsflächen sind diejenigen Flächen, die für die unterschiedlichen Funktionen des Fensterflügels erforderlich sind, wie bspw. der das Fenster gegenüber dem Fensterrahmen abdichtende Überschlag, die Stützfläche, die eine in das Fenster eingesetzte Fensterscheibe stützt, sowie weitere Funktionsflächen, an denen bspw. Scheibendichtungen angeordnet werden.

Das Profil 1 wird zunächst auf die Profilzuschnittlänge abgelängt, welche um den sogenannten Abbrand länger ist, als das für das gefügte Profil 1 geforderte Endmaß.

Insbesondere in der Figur 1 und der Figur 14 ist der sogenannte Positionierschritt schematisch dargestellt, der Teil des erfindungsgemäßen Verfahrens sein kann. Bei diesem Positionierschritt wird das jeweilige Profil 1 mit seiner Fügefläche 26, 27 gegen eine nicht dargestellte Anschlagfläche eines Profilanschlags gepresst, um die Fügefläche 26, 27 an der Anschlagfläche auszurichten. Die Positionierung beider Profile 1 kann gleichzeitig erfolgen, wenn diese gegen die Anschlagflächen des Profilanschlags gedrückt werden, um die jeweiligen Fügeflächen 26, 27 gegenüber dem Profilanschlag und somit mit einer Heizeinheit 4 sowie zueinander auszurichten.

Nachdem das Profilteil 1 an den Profilanschlag ausgerichtet ist, erfolgt eine derart feste Verspannung des Profils 1 auf der Profilauflage 30, dass in den folgenden Schritten keine wesentliche Bewegung zwischen dem Profil 1 und der Profilauflage 30 erfolgen kann.

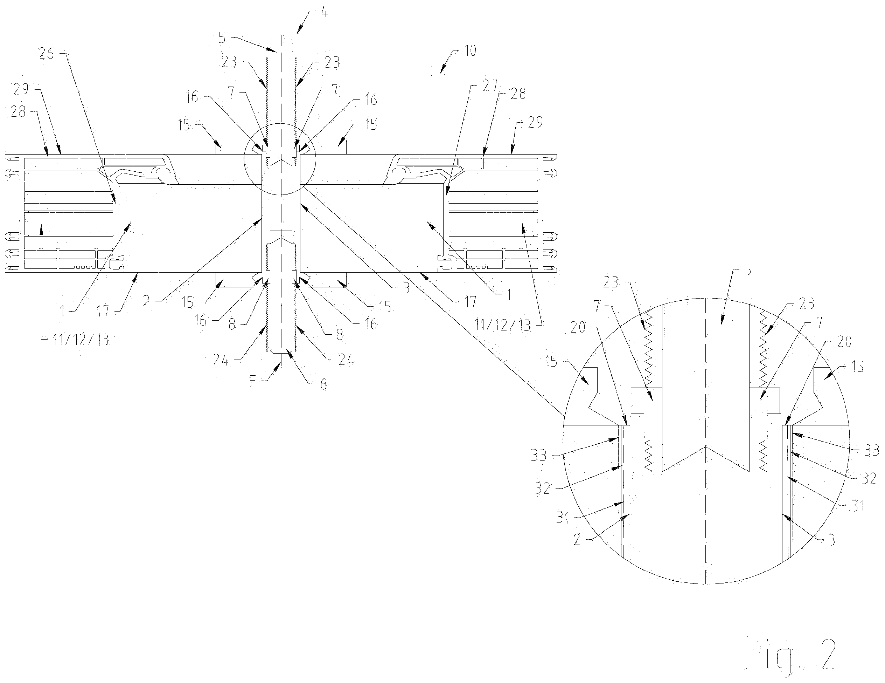

Gemäß Figur 1 und Figur 14 ist an der Profilauflage 30 wenigstens ein Begrenzungselement in Form eines Begrenzungsmessers 15 angeordnet, das an der Außenfläche des Profilteils 1, hier an der unteren in Figur 2 verdeckten Sichtfläche 17, anliegt und dabei an die Fügefläche 26, 27 des Profils 1 angrenzt.

Die Vorrichtung 10 weist zudem eine Heizeinheit 4 mit wenigstens zwei Heizelementen 5, 6 auf, welche vorliegend als Heizspiegel ausgeführt sind, wie auf den Figuren 1 bis 8 dargestellt ist. Die beiden Heizelemente 5, 6 der Heizeinheit 4 können mittels eines Servomotors 25 horizontal und/oder vertikal bewegt und positioniert werden, insbesondere können die beiden Heizelemente 5, 6 gegeneinander und/oder in Richtung von der Innen- zur Außenecke und/oder von der Außen- zur Innenecke der gefügten Profile 1 bewegt werden, wie aus Figur 1 weiter hervorgeht. Die horizontale und/oder die vertikale Bewegung jedes Heizelements 5, 6 kann unabhängig voneinander angesteuert werden.

Es wird eine Relativbewegung zwischen jedem Heizelement 5, 6 und mindestens einer Fügefläche 26, 27 in einer Fügeebene F ausgeführt, die im Wesentlichen parallel zu der wenigstens einen Fügefläche 26, 27 ist, wie insbesondere Figur 2 verdeutlicht.

Jedes Heizelement 5, 6 weist wenigstens zwei Heizplatten bzw. Heizflächen 23, 24 auf, welche jeweils einer Fügefläche 26, 27 eines zu fügenden Profilendes 2, 3 zugeordnet sind. Die Heizelemente 5, 6 können mit beschichteten, vorzugsweise teflonisierten, geriffelten oder verzahnten Heizflächen 23, 24, insbesondere beidseitig, bestückt sein.

Wie aus den Figuren 1 bis 4 und 14, insbesondere den entsprechenden Detailansichten, hervorgeht, ist an jedem Heizelement 5, 6 je ein Werkzeug, vorliegend in Form eines Schneidmesser 7, 8 mit vorzugsweise mehreren Schneiden 16 angeordnet, wobei der unteren Sichtfläche 17 des Profilendes 2, 3 ein unteres Schneidmesser 7 und der oberen Sichtfläche 18 ein oberes Schneidmesser 8 zugeordnet ist. Die Schneidmesser 7, 8 können insbesondere mittels der Heizeinheit 4 beheizt werden, was in der vorliegenden Ausführungsform der Erfindung der Fall ist.

Mittels dieser Schneidmesser 7, 8 werden die Sichtflächen 17, 18 an ihrer jeweiligen Profilrandschicht 20 bearbeitet, d.h. die Profilenden 2, 3 werden vorzugsweise mindestens im Schmelzweg entlang ihrer Sichtflächen 17, 18 angefast und es wird eine Fase zur Sichtfläche 17, 18 hin erzeugt. Es wird also die äußere Profilandschicht 20 des Profils 1 entfernt. Durch dieses Abtragen von Material in dem Sichtflächenbereich des Profils 1 wird das für die Eckenfestigkeit schädliche Material der äußersten Profilrandschicht 20 im Bereich der Sichtfläche 17, 18 entfernt. Die Profilrandschicht 20 kann zum einem noch zusätzlich die Schutzfolie oder auch die Dekorfolie des Profils 1 selbst enthalten. Figur 2 zeigt die Profilrandschicht 20 in einer Detailansicht.

Darüber hinaus haben Versuche gezeigt, dass selbst bei Profilen 1 ohne jegliche Schutz- und/oder Dekorfolien Partikel bzw. Komponenten auf bzw. in der Profilrandschicht 20 im Bereich der Sichtfläche 17, 18 enthalten sind, welche für die Eckenfestigkeit der gefügten Profile 1 äußerst schädlich sind, beispielsweise notwendige Mittel der PVC-Profil-Extrusion, Verunreinigungen von Lagerungen und/oder Transport oder dergleichen. Darüber hinaus zeigt die Erfahrung, dass unmittelbar vor dem Verbinden geschnittene Profilflächen deutlich höhere Eckenfestigkeitswerte erzielen, als unbearbeitete Flächen.

Aus diesem Grund ist es vorteilhaft, lediglich die äußere Profilrandschicht 20 des Profils 1 zu entfernen. Denn dadurch bleibt so viel Material wie möglich am Profil 1 erhalten, wird also nicht abgetragen, so dass die Eckenfestigkeit nicht beeinträchtigt wird.

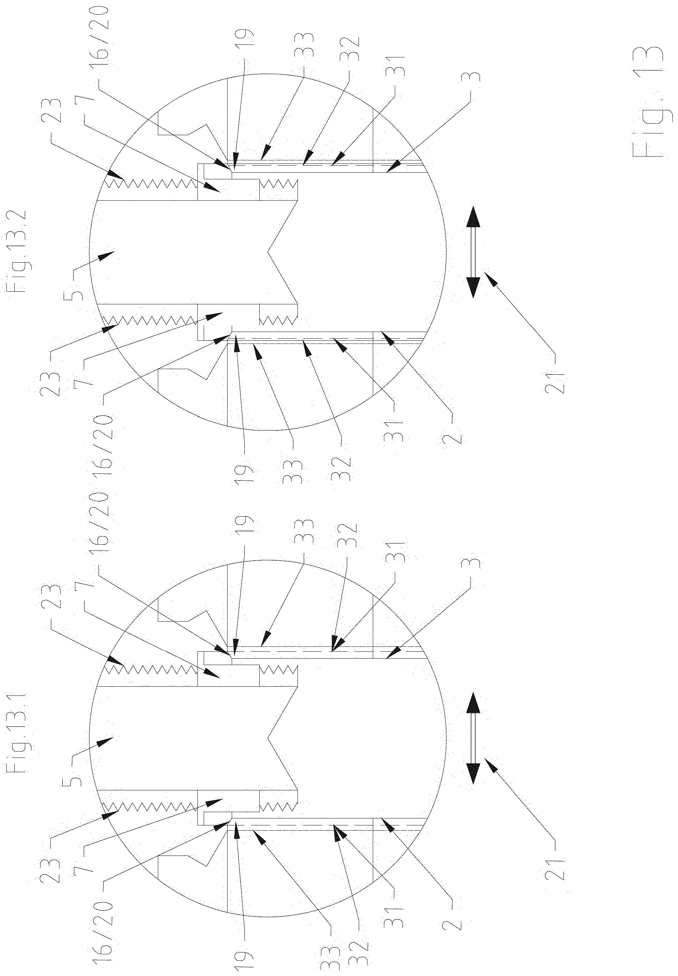

Wie aus Figur 13.1 hervorgeht, besitzt die Abtragtiefe 19 der abgetragenen Beschichtung bzw. der Profilrandschicht 20 am Profil 1 in Gehrungsrichtung 21 gesehen, d.h. die Trennbereichslinie 32, vorzugsweise das gleiche Maß, wie mindestens der Schmelzendweg 31 beim Schmelzprozess. Ferner sind auch andere Abtragtiefen 19 und somit andere Trennbereichslinien 32, beispielsweise zwischen Schmelzendpunktlinie 31 und Fügeendpunktlinie 33 denkbar, wie aus Fig. 13.2 hervorgeht.

Wie Figuren 1 bis 8 weiter verdeutlichen, wird die Heizeinheit 4 mit den Heizelementen 5, 6 zwischen die zu fügenden Profilenden 2, 3 der Profile 1 positioniert.

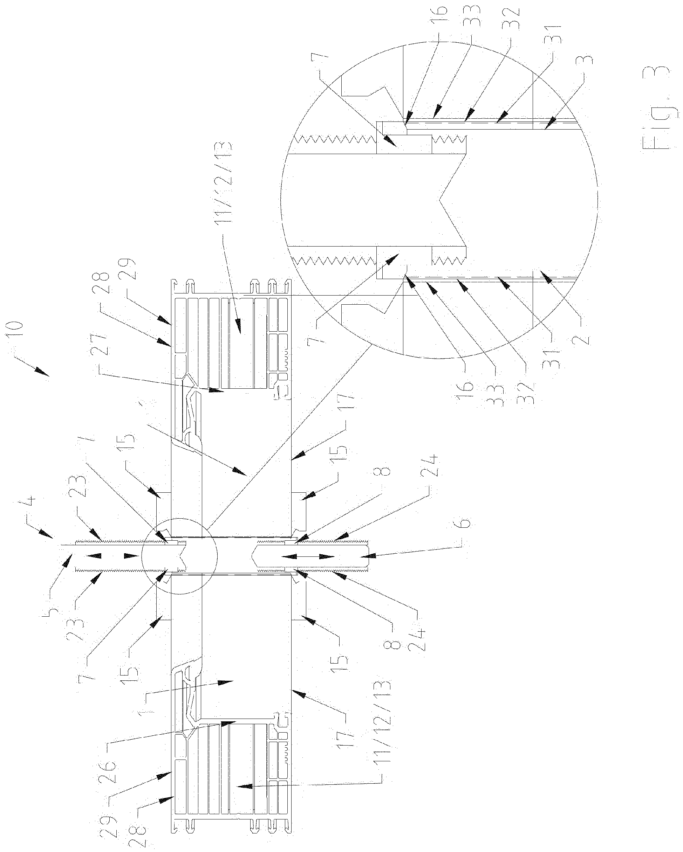

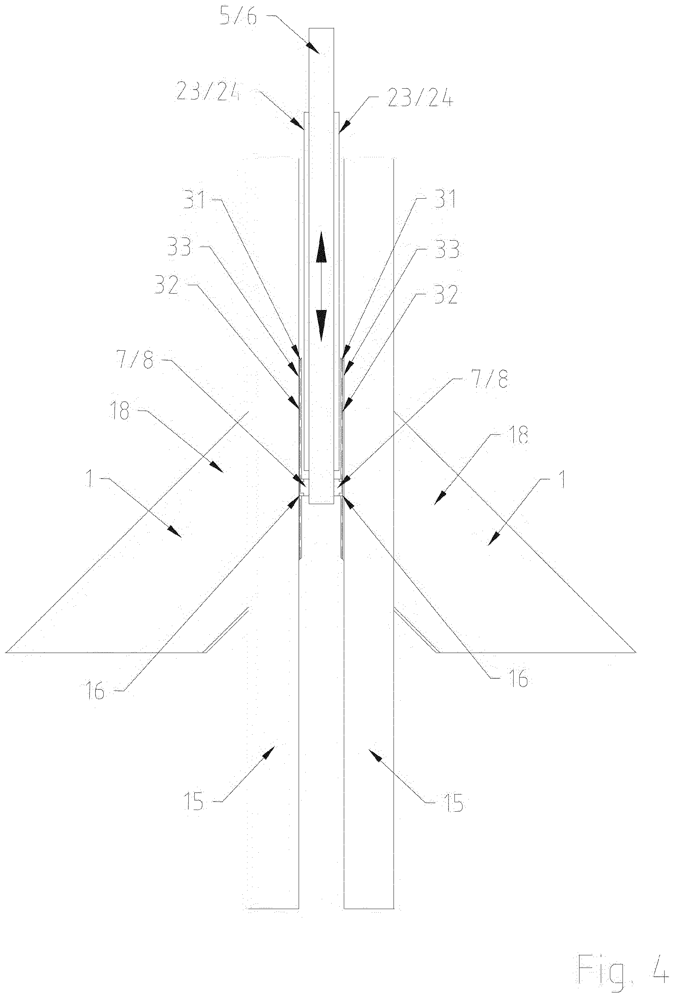

Gemäß Figuren 3 und 4, insbesondere den entsprechenden Detailansichten, findet das oben beschriebene Anfasen der Profilenden 2, 3 entlang ihrer Sichtflächen 17, 18 mittels wenigstens eines an den Heizelementen 5, 6 der Heizeinheit 4 angeordneten Werkzeugs statt, insbesondere mittels des wenigstens einen Schneidmessers 7, 8.

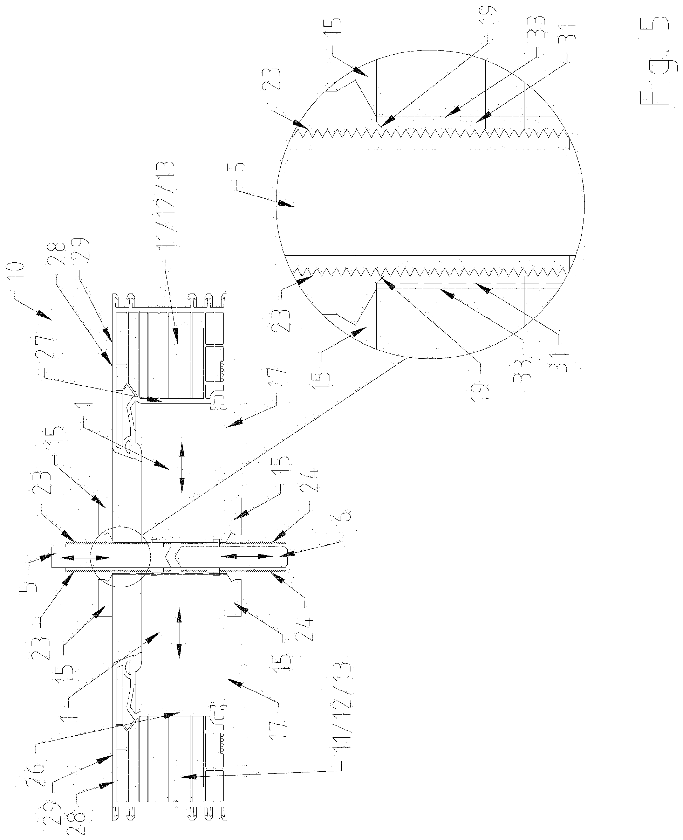

Das Ergebnis ist der Figur 5, insbesondere der dortigen Detailansicht zu entnehmen, wonach die Profilenden 2, 3, insbesondere mindestens bis zum Schmelzendweg 31 angefast sind. Hierdurch wird die Geometrie des mechanisch abgetragenen Spans vorzugsweise als eine Schräge, d.h. Fase ausgelegt. Dies hat zum einen den Vorteil, dass weniger Material abgetragen wird, was zur Erhöhung der Eckfestigkeit führt, da mehr Materialvolumen zur Verfügung steht. Zum anderen wird im Schmelzprozess die Fließrichtung des Schmelzgutes 9 besser in die notwendige Richtung geführt, d.h. in das Profilinnere 11 bzw. in das Innere 12 der Profilkammern 13.

Nach dem Anfasen werden die miteinander zu fügenden Profilenden 2, 3 auf die Heizeinheit 4 zugestellt, wie dies in den Figuren 5 bis 8 dargestellt ist.

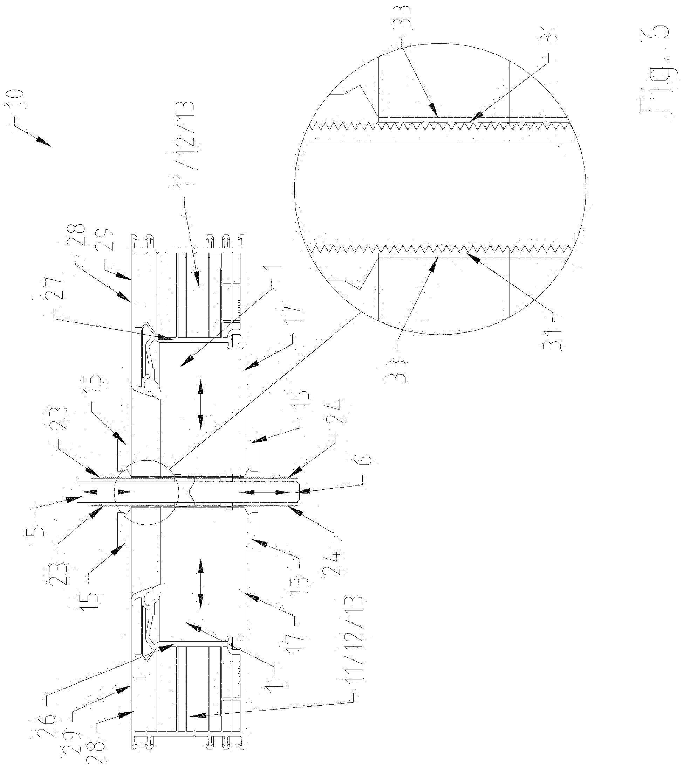

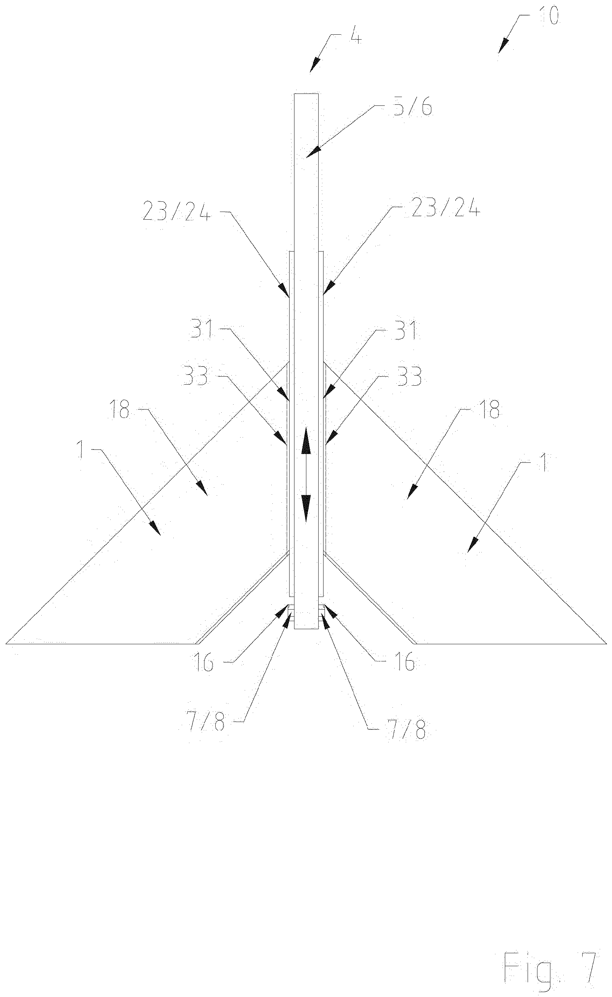

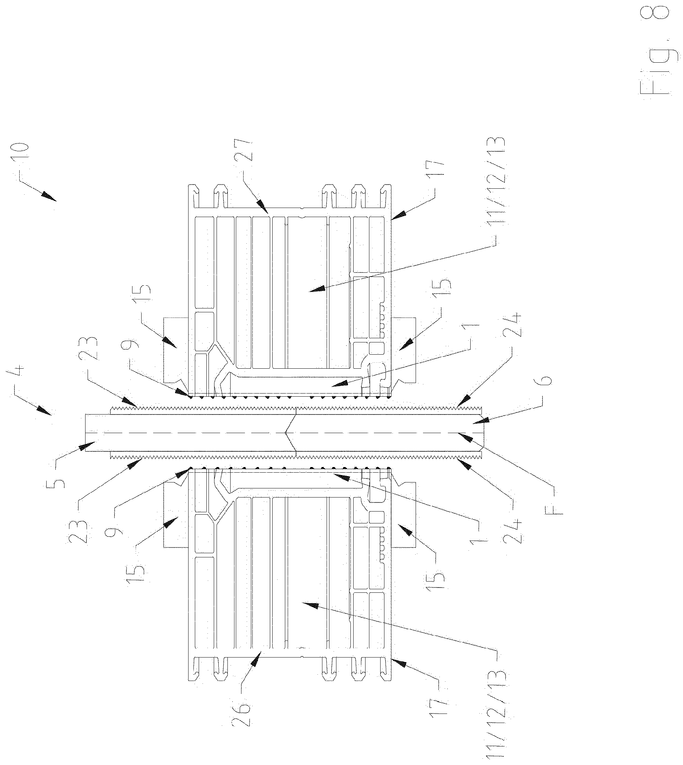

Figur 5 zeigt den Beginn, die Figuren 6 und 7 das Ende des Anschmelzens und die Figur 8 das Ende des Anschmelzens mit bereits geöffneten Profilauflagen 30. Beim Anschmelzen wird die Fügefläche 26, 27 des Profils 1 gegen die Heizflächen 23, 24 der Heizeinheit 4 gedrückt, um das Profil 1 an seiner Fügefläche 26, 27 stirnseitig anzuschmelzen. Dazu können die jeweiligen Profilauflagen 30 in Richtung zu der Heizeinheit 4 verfahren werden, welche nach dem Entfernen des Profilanschlags zwischen die Fügeflächen 26, 27 der Profilteile 1 gefahren wurde.

Wesentlich bei der vorliegenden Erfindung ist gemäß Figuren 5 bis 8, dass die Heizeinheit 4 mehrgeteilt ist. Denn es findet eine Bewegung der Heizelemente 5, 6 derart statt, dass das Schmelzgut 9 in das Profilinnere 11 bzw. in das Innere 12 der Profilkammern 13 der Profile 1 verdrängt wird. Auf diese Weise kann das Schmelzgut 9 von den Sichtflächen 17, 18 kontrolliert nach innen in die Profilkammern 13 verschoben werden. Im Rahmen der Erfindung ist es auch denkbar, dass die Heizeinheit 4 auch aus mehr als zwei Heizelementen besteht, um noch mehr Schmelzgut 9 gezielt in die Innenkammern 12 zu lenken, beispielsweise von vorne nach hinten, von hinten nach vorne, von oben nach unten und von unten nach oben.

Der Schmelzprozess umfasst das Anschmelzen des Profils 1 bis zum Schmelzendpunkt, das Nachwärmen, also ein Verharren am Schmelzendpunkt zur Erzeugung von Tiefenwärme, d.h. ein Erwärmen des zu verstauchenden Materials. Vorliegend wird beides zum Schmelzprozess kombiniert, welcher für die Verschiebung des Schmelzgutes 9 ins Profilinnere 11 bzw. in das Innere 12 der Profilkammer 13 genutzt wird.

Weiterhin ist in Figuren 3 und 5 der Schmelzendweg bzw. die Schmelzendpunktlinie 31 eingezeichnet, welcher den Bereich kennzeichnet, bis zu welchem die Heizeinheit 4 während des Schmelzprozesses in das Material des Profils 1 vordringt. Das dabei aufgeschmolzene Material weicht als Schmelzüberschuss bzw. Schmelzgut 9 aus und wird durch die Heizspiegelbewegungen kontrolliert ins Profilinnere 11 verschoben. Figur 3 zeigt den Schneidprozess und Figur 5 das Einbringen der Heizeinheit 4.

Des Weiteren ist in Figur 3 die Trennbereichslinie 32 zwischen dem Schmelzendweg bzw. der Schmelzendpunktlinie 31 und der Fügeendpunktlinie 33 eingezeichnet. Die Trennbereichslinie 32 zeigt an, bis zu welchem Punkt die Profilrandschicht 20 abgetragen wird. Die Fügeendpunktlinie 33 kennzeichnet den Bereich, bis zu welchem das Profil 1 an seiner Profilwand 28 während des anschließenden Fügeschrittes gestaucht wird. Das Verfahren kann auch in der Gestalt modifiziert werden, dass die Trennbereichslinie 32 sowie die Schmelzendpunktlinie 31 zusammenfallen oder, dass die Fügeendpunktlinie 33 und die Trennbereichslinie 32 zusammenfallen. Bevorzugt ist jedoch die in der Figur 2 eingezeichnete Anordnung, bei der die Trennbereichslinie 32 näher an der Schmelzendpunktlinie 31 vorgesehen ist als an der Fügeendpunktlinie 33.

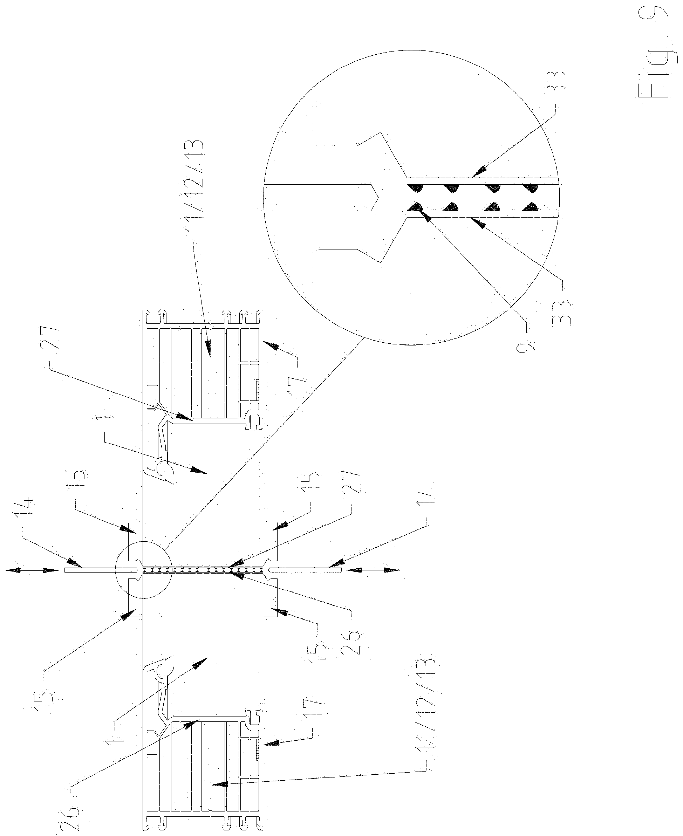

Weiterhin ist in den Figuren 9, 10 und 11 eine als Nachbearbeitungswerkzeug wirkende Formleiste 14 dargestellt. Wie erwähnt, wird das durch das Anschmelzen erzeugte Schmelzgut 9 durch die Heizspiegelbewegungen ins Profilinnere 11 verschoben. Die Formleiste 14 soll verhindern, dass sich beim Stauchen der Profile 1 kein erwärmtes Material nach außen drückt. In Figur 14 ist ebenfalls die Formleiste 14 zu erkennen.

Zunächst erfolgt eine kontrollierte Verschiebung des Schmelzüberschusses bzw. des Schmelzgutes 9 ins Profilinnere 11 unter Verwendung der mehrgeteilten Heizeinheit 4. Hierbei werden die Heizelemente 5, 6 derart bewegt, dass das Schmelzgut 9 in das Profilinnere 11 bzw. in das Innere 12 der Profilkammern 13 der Profile 1 verdrängt wird.

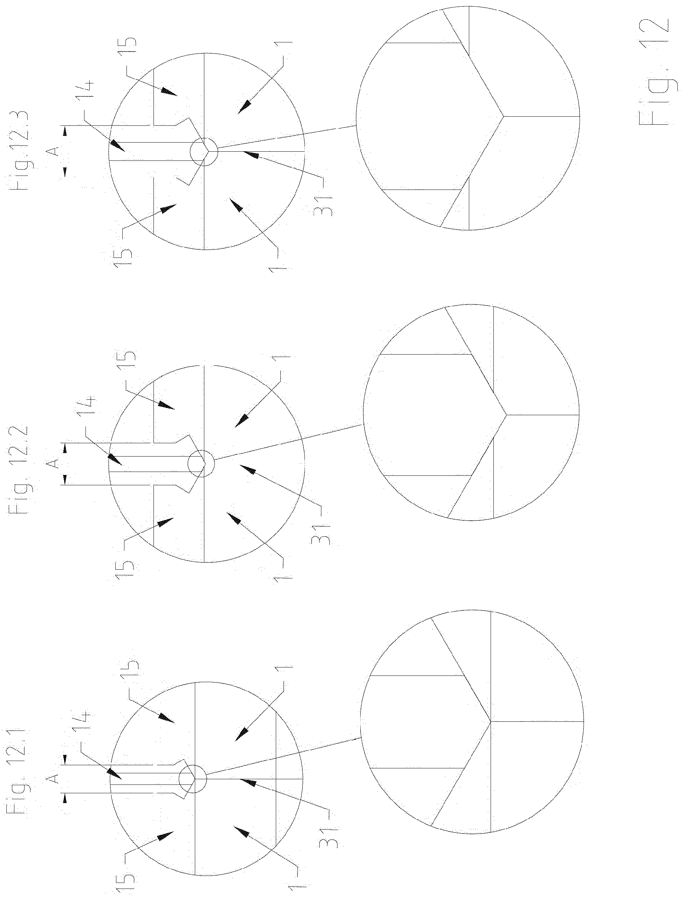

Nachdem das Schmelzgut 9 nach innen verschoben ist, was in den Figuren 9 bis 12 gezeigt ist, kann eine Bearbeitung der beiden Profilteile 1 mittels Formleiste 14 erfolgen. Im vorliegenden Beispiel erfolgt eine zweistufige Nachbearbeitung, bei welcher während des Stauchprozesses der jeweiligen Profilkante 29 eine nach innen auf die Fügefläche 26, 27 gerichtete Bewegungsrichtung aufgeprägt wird, so dass sich beim anschließenden Fügen eine V-Nut zwischen den Profilteilen 1 im Bereich der Verschweißung ergibt. Figur 12 mit ihren Detailansichten zeigt unterschiedliche Ausgestaltungen dieser V-Nut.

Während des Umformens und/oder Verdrängens des Schmelzgutes 9 mittels Formleiste 14 kann das Stauchen der Profilenden 2, 3 gegeneinander stattfinden, um die Profile 1 miteinander zu fügen. Es ist auch denkbar, die Profilenden 2, 3 gegeneinander zu stauchen, ohne Umformen und/oder Verdrängen des Schmelzgutes 9 mittels Formleiste 14.

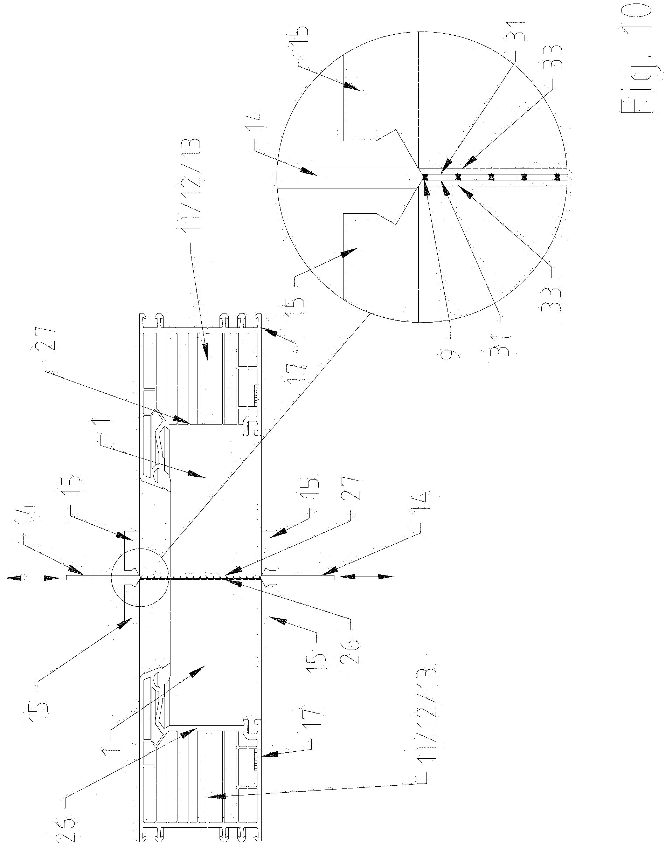

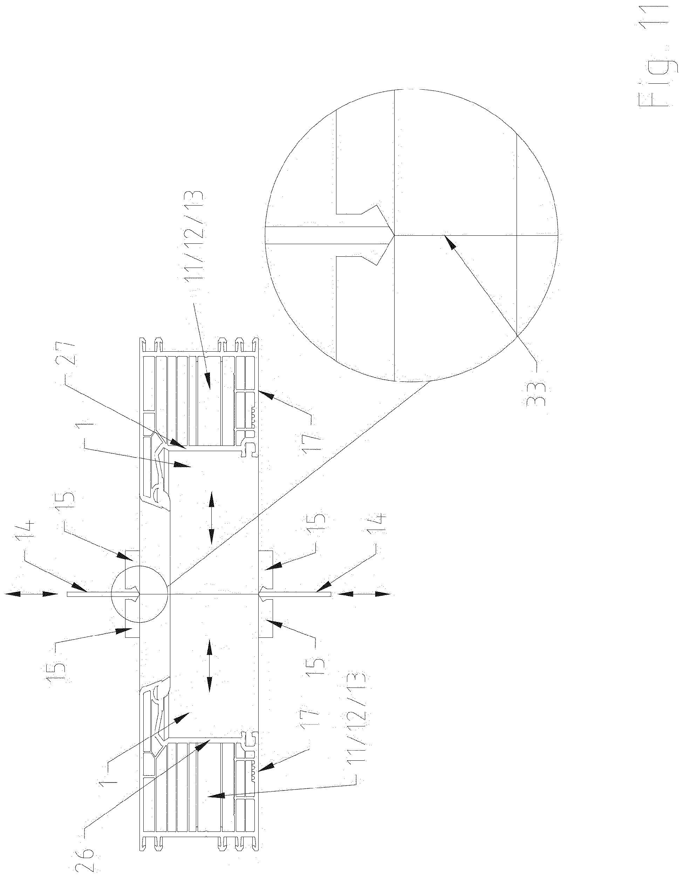

Figur 9 zeigt die Vorrichtung kurz vor Beginn des Stauchprozesses, Figur 10 eine Zwischenstellung und Figur 11 das Ende des Stauchprozesses.

Figur 10, insbesondere die Detailansicht, verdeutlicht, dass die Kontur, d.h. die Schrägen der Formleiste 14 das Begrenzungsmesser 15, insbesondere dessen Kontur, d.h. die Schrägen berühren und so den Weg des Schmelzgutes 9 nach außen verschließen. Über die Position, genauer gesagt den Abstand A, welcher unabhängig von den Profilauflagen 30 eingestellt werden kann, der Begrenzungsmesser 15 am Stauchende kann die Ausgestaltung der V-Nut der Verbindung eingestellt werden, wie aus Figur 12 hervorgeht. Je größer der Abstand A am Ende des Stauchprozesses ist, desto größer ist der Spalt zwischen den Begrenzungsmessern 15. Auf diese Weise wird die Formleiste 14 weniger über die Schrägen des Begrenzungsmessers 15 außerhalb der Verbindung geschoben und die Formleiste 14 kann tiefer in der Fügeebene F verbleiben, so dass sich eine größere V-Nut realisieren lässt, wie aus Figur 12.3 hervorgeht. Bei einem Abstand A von Null zwischen den Begrenzungsmessern 15 wird die Formleiste 14 vollständig aus den Profilen 1 herausgeschoben und es stellt sich keine V-Nut ein, wie Figur 12.1 zeigt. Die Fig. 12.2 zeigt eine Zwischenstellung.

Die Figur 9 zeigt die Stellung kurz vor dem Beginn des Fügens bzw. Stauchens der Profile 1. Die Formleiste 14 steht oberhalb bzw. unterhalb der Sichtfläche 17, 18 und wird durch den Stauchprozess über die Schrägen bzw. den Hinterschnitt des Begrenzungsmessers 15 nach oben/unten gedrückt. Somit ist der Bereich für das Schmelzgut 9 nach außen hin schon durch die Formleiste 14 versperrt und es kann kein Schmelzgut 9 durch den Fügeprozess nach außen dringen.

Dass das geschmolzene Material beim Fügen/Stauchen nicht an der Sichtfläche 17, 18 austreten kann, wird durch zwei Maßnahmen gewährleistet, jeweils eine im Schmelzprozess und eine Maßnahme im Stauchprozess.

Im Schmelzprozess wird durch die Heizeinheit 4 und deren Bewegungen während des Schmelzprozesses, Schmelzgut 9 kontrolliert in das Innere 12 der Profilkammern 13 bewegt. Um sicher zu stellen, dass keine Verunreinigungen aus dem Bereich der Sichtflächen 17, 18 in das Schmelzgut 9 gelangen können, wird Material und somit mögliche Verunreinigungen von der Oberfläche des Profils 1 im Fügebereich abgetragen.

Ferner kann die Formleiste 14 während des Stauchprozesses mit ihrer Kontur das angewärmte Material zwischen Schmelzend- und Fügeendpunkt formen und sie kann gleichzeitig durch den Formschluss der Schräge der Formleiste 14 mit den Schrägen der Begrenzungsmesser 15 das Austreten des Schmelzgutes 9 nach außen verhindern und je nach Begrenzungsmesserposition am Stauchende zur Formgebung beitragen.

Das Begrenzungsmesser 15 kann unter Federvorspannung in Richtung der Fügefläche 26, 27 geführt sein, um während des Anschmelzschrittes einen möglichst engen Spalt zwischen der Heizfläche 23, 24 und der Trennkante zu bilden. Auch kann das Begrenzungsmesser 15 in seiner Funktion zusätzlich durch die Formleiste 14 ergänzt sein, welche in dem Anschmelzschritt ein nach außen Treten des Schmelzgutes 9 verringert. Gleichzeitig kann die Formleiste 14 mit der Fügeebene F abschließen.

Auf den Sichtflächen 17, 18 vorhandene Schutzfolien, die der Einfachheit halber hier nicht dargestellt sind, können ohne vorherige Bearbeitung auf dem Profil 1 verbleiben und stören die Ästhetik und die mechanische Festigkeit der erfindungsgemäß entstandenen Fügeverbindung nicht oder nur unwesentlich.

### Bezugszeichenliste

- 1: Profil
- 2: Profilende
- 3: Profilende
- 4: Heizeinheit
- 5: Heizelement
- 6: Heizelement
- 7: Werkzeug / Schneidmesser
- 8: Werkzeug / Schneidmesser
- 9: Schmelzgut
- 10: Vorrichtung
- 11: Profilinnere
- 12: Innere der Profilkammer
- 13: Profilkammer
- 14: Formleiste
- 15: Begrenzungsmesser
- 16: Schneiden
- 17: untere Sichtfläche
- 18: obere Sichtfläche
- 19: Abtragtiefe
- 20: Profilrandschicht
- 21: Gehrungsrichtung
- 23: Heizfläche
- 24: Heizfläche
- 25: Servomotor
- 26: Fügefläche
- 27: Fügefläche
- 28: Profilwand
- 29: Profilkante
- 30: Profilauflage
- 31: Schmelzendweg bzw. Schmelzendpunktlinie
- 32: Trennbereichslinie
- 33: Fügeendpunktlinie
- F: Fügeebene
- A: Abstand zwischen den Begrenzungsmessern

## Patentansprüche

1. Verfahren zum Verschweißen von wenigstens zwei Profilen (1) für Fenster- oder Türrahmen bzw. -flügeln mit folgenden Schritten:
- Bereitstellen von wenigstens zwei Profilen (1), welche an Fügeflächen (26, 27) der Profilenden (2, 3) miteinander verbunden werden,
- Positionierung einer Heizeinheit (4) mit wenigstens zwei Heizelementen (5, 6) zwischen die zu fügenden Profilenden (2, 3),
- Anfasen, insbesondere Abtragen, einer Profilrandschicht (20) der Profilenden (2, 3), vorzugsweise mindestens bis zum Schmelzweg, entlang ihrer Sichtflächen (17, 18) mittels wenigstens eines an den Heizelementen (5, 6) der Heizeinheit (4) angeordneten Werkzeugs, insbesondere mittels wenigstens eines Schneidmessers (7, 8),
- Zustellen der miteinander zu fügenden Profilenden (2, 3) auf die Heizeinheit (4),
- Anschmelzen der Profilenden (2, 3) an ihren späteren Fügeflächen (26, 27) mittels wenigstens einer an den Heizelementen (5, 6) angeordneten Heizfläche (23, 24),
- Bewegung der Heizelemente (5, 6) derart, dass das Schmelzgut (9) in das Profilinnere (11) bzw. in das Innere (12) der Profilkammern (13) der Profile (1) verdrängt wird,
- Herausnehmen der Heizeinheit (4) zwischen den zu fügenden Profilenden (2, 3) und
- Stauchen der Profilenden (2, 3) gegeneinander, so dass die Profile (1) miteinander gefügt werden.

2. Verfahren nach Anspruch 1, **dadurch gekennzeichnet, dass** eine Relativbewegung zwischen jedem Heizelement (5, 6) und mindestens einer Fügefläche (26, 27) in einer Fügeebene (F) ausgeführt wird, die im Wesentlichen parallel zu der wenigstens einen Fügefläche (26, 27) ist.

3. Verfahren nach Anspruch 1 oder 2, **dadurch gekennzeichnet, dass** die beiden Heizelemente (5, 6) der Heizeinheit (4) horizontal und/oder vertikal bewegt und positioniert werden, insbesondere dass die beiden Heizelemente (5, 6) gegeneinander und/oder in Richtung von der Innen- zur Außenecke und/oder von der Außenzur Innenecke der gefügten Profile (1) bewegt werden.

4. Verfahren nach einem der Ansprüche 1 bis 3, **dadurch gekennzeichnet, dass** jedes Heizelement (5, 6) wenigstens zwei Heizflächen (23, 24) aufweist, welche jeweils einer Fügefläche (26, 27) eines zu fügenden Profilendes (2, 3) zugeordnet sind.

5. Verfahren nach einem der vorherigen Ansprüche, **dadurch gekennzeichnet, dass** die horizontale und/oder die vertikale Bewegung jedes Heizelements (5, 6) unabhängig voneinander angesteuert wird.

6. Verfahren nach einem der vorherigen Ansprüche, **dadurch gekennzeichnet, dass** an jedem Heizelement (5, 6) je ein Schneidmesser (7, 8) mit vorzugsweise mehreren Schneiden (16) angeordnet ist, wobei der unteren Sichtfläche (17) des Profilendes (2, 3) vorzugsweise ein unteres Schneidmesser (7) und der oberen Sichtfläche (18) vorzugsweise ein oberes Schneidmesser (8) zugeordnet ist.

7. Verfahren nach einem der vorherigen Ansprüche, **dadurch gekennzeichnet, dass** die Abtragtiefe (19) der abgetragenen Beschichtung bzw. Profilrandschicht (20) am Profil (1) in Gehrungsrichtung (21) gesehen mindestens das gleiche Maß besitzt, wie der Schmelzendweg (31) beim Schmelzprozess.

8. Verfahren nach einem der vorherigen Ansprüche, **dadurch gekennzeichnet, dass** die Profilrandschicht (20) bis zu einer Trennbereichslinie (32) abgetragen wird und eine Fügeendpunktlinie (33) den Bereich kennzeichnet, bis zu welchem das Profil (1) an seiner Profilwand (28) während des Fügeschrittes gestaucht wird und das Profil (1) bis zu einer Schmelzendpunktlinie (31) angeschmolzen wird und wobei die Trennbereichslinie (32) und die Schmelzendpunktlinie (31) oder die Trennbereichslinie (32) und die Fügeendpunktlinie (33) zusammenfallen oder die Trennbereichslinie (32) zwischen der Schmelzendpunktlinie (31) und der Fügeendpunktlinie (33) liegt.

9. Verfahren nach einem der vorherigen Ansprüche, **dadurch gekennzeichnet, dass** das Schneidmesser (7, 8), insbesondere mittels der Heizeinheit (4), beheizt wird.

10. Verfahren nach einem der vorherigen Ansprüche, **dadurch gekennzeichnet, dass** die Heizelemente (5, 6) mit beschichteten, vorzugsweise teflonisierten, geriffelten und/oder verzahnten Heizplatten (23, 24), insbesondere beidseitig, bestückt sind.

11. Vorrichtung (10) zum Verschweißen von wenigstens zwei Profilen (1) für Fenster- oder Türrahmen bzw. -flügeln, insbesondere zum Durchführen eines Verfahrens nach einem der Ansprüche 1 bis 10, mit einer zwischen die zu fügenden Profilenden (2, 3) einbringbaren Heizeinheit (4) mit wenigstens zwei Heizelementen (5, 6) zum Anschmelzen der Profilenden (2, 3) an ihren späteren Fügeflächen, wobei zum Anfasen, insbesondere Abtragen, einer Profilrandschicht (20) der Profilenden (2, 3) entlang ihrer Sichtflächen (12, 13) wenigstens ein an den Heizelementen (5, 6) der Heizeinheit (4) angeordnetes Werkzeug, insbesondere wenigstens ein Schneidmesser (7, 8), vorgesehen ist, wobei die Heizelemente (5, 6) derart bewegbar sind, dass das Schmelzgut (9) in das Profilinnere (11) bzw. in das Innere (12) der Profilkammern (13) verdrängt wird, wobei eine Stauchvorrichtung zum Stauchen der Profilenden (2, 3) vorgesehen ist.

12. Vorrichtung (10) nach Anspruch 11, **dadurch gekennzeichnet, dass** die Heizelemente (5, 6) mittels Servomotoren (25) horizontal und/oder vertikal bewegbar und positionierbar sind, insbesondere dass die beiden Heizelemente (5, 6) gegeneinander und/oder in Richtung von der Innen- zur Außenecke und/oder von der Außenzur Innenecke der gefügten Profile (1) bewegbar sind.

13. Vorrichtung (10) nach den Ansprüchen 11 oder 12, **dadurch gekennzeichnet, dass** an jedem Heizelement (5, 6) je ein Schneidmesser (7, 8) mit vorzugsweise mehreren Schneiden (16) angeordnet ist, wobei der unteren Sichtfläche (17) des Profilendes (2, 3) vorzugsweise ein unteres Schneidmesser (7) und der oberen Sichtfläche (18) vorzugsweise ein oberes Schneidmesser (8) zugeordnet ist.

14. Vorrichtung (10) nach den Ansprüchen 11 bis 13, **dadurch gekennzeichnet, dass** die Heizelemente (5, 6) mit beschichteten, vorzugsweise teflonisierten, geriffelten oder verzahnten Heizflächen (23, 24), insbesondere beidseitig, bestückt sind.

15. Vorrichtung (10) nach einem der Ansprüche 11 bis 14, **dadurch gekennzeichnet, dass** das Werkzeug (7, 8), insbesondere mittels der Heizeinheit (4), beheizt ist.

## Claims

1. Method for welding at least two profiles (1) for window frames or window casements, or door frames or door leaves, comprising the following steps:
- providing at least two profiles (1) which will be connected to one another at joining surfaces (26, 27) of the profile ends (2, 3),
- positioning a heating unit (4) with at least two heating elements (5, 6) between the profile ends (2, 3) to be joined,
- bevelling, in particular removing material from, a profile edge layer (20) of the profile ends (2, 3), preferably at least as far as the melting path, along their visible surfaces (17, 18) by means of at least one tool arranged on the heating elements (5, 6) of the heating unit (4), in particular by means of at least one cutting blade (7, 8),
- advancing the profile ends (2, 3) to be joined to one another to the heating unit (4),
- incipiently melting the profile ends (2, 3) at what will be their joining surfaces (26, 27) by means of at least one heating surface (23, 24) arranged on the heating elements (5, 6),
- moving the heating elements (5, 6) in such a way that the molten material (9) is displaced into the profile interior (11) or into the interior (12) of the profile chambers (13) of the profiles (1),
- removing the heating unit (4) between the profile ends (2, 3) to be joined, and
- compressing the profile ends (2, 3) against one another such that the profiles (1) are joined to one another.

2. Method according to Claim 1, **characterized in that** a relative movement between each heating element (5, 6) and at least one joining surface (26, 27) is performed in a joining plane (F) which is substantially parallel to the at least one joining surface (26, 27).

3. Method according to Claim 1 or 2, **characterized in that** the two heating elements (5, 6) of the heating unit (4) are moved and positioned horizontally and/or vertically, in particular **in that** the two heating elements (5, 6) are moved relative to one another and/or in the direction from the inner corner to the outer corner, and/or from the outer corner to the inner corner, of the joined profiles (1).

4. Method according to one of Claims 1 to 3, **characterized in that** each heating element (5, 6) has at least two heating surfaces (23, 24), each of which is assigned to a joining surface (26, 27) of a profile end (2, 3) to be joined.

5. Method according to one of the preceding claims, **characterized in that** the horizontal and/or the vertical movement of each heating element (5, 6) is controlled in a mutually independent manner.

6. Method according to one of the preceding claims, **characterized in that**, on each heating element (5, 6), there is arranged in each case one cutting blade (7, 8) with preferably multiple cutting edges (16), wherein a lower cutting blade (7) is preferably assigned to the lower visible surface (17) of the profile end (2, 3) and an upper cutting blade (8) is preferably assigned to the upper visible surface (18).

7. Method according to one of the preceding claims, **characterized in that** the material-removal depth (19) of the coating or profile edge layer (20) on the profile (1) subjected to material removal, when viewed in the mitre direction (21), has at least the same dimension as the end-of-melting path (31) in the melting process.

8. Method according to one of the preceding claims, **characterized in that** material is removed from the profile edge layer (20) as far as a separation region line (32), and a joining end point line (33) indicates the region as far as which the profile (1) is compressed at its profile wall (28) during the joining step, and the profile (1) is incipiently melted as far as a melting end point line (31), and wherein the separation region line (32) and the melting end point line (31) or the separation region line (32) and the joining end point line (33) coincide or the separation region line (32) is between the melting end point line (31) and the joining end point line (33).

9. Method according to one of the preceding claims, **characterized in that** the cutting blade (7, 8) is heated, in particular by means of the heating unit (4).

10. Method according to one of the preceding claims, **characterized in that** the heating elements (5, 6) are provided with coated, preferably Teflon-coated, corrugated and/or toothed heating plates (23, 24), in particular on both sides.

11. Device (10) for welding at least two profiles (1) for window frames or window casements, or door frames or door leaves, in particular for carrying out a method according to one of Claims 1 to 10, having a heating unit (4) which is introducible between the profile ends (2, 3) to be joined and has at least two heating elements (5, 6) for incipiently melting the profile ends (2, 3) at what will be their joining surfaces, wherein, for bevelling, in particular removing material from, a profile edge layer (20) of the profile ends (2, 3) along their visible surfaces (17, 18), provision is made of at least one tool, in particular at least one cutting blade (7, 8), which is arranged on the heating elements (5, 6) of the heating unit (4), wherein the heating elements (5, 6) are movable in such a way that the molten material (9) is displaced into the profile interior (11) or into the interior (12) of the profile chambers (13), wherein provision is made of a compression device for compressing the profile ends (2, 3).

12. Device (10) according to Claim 11, **characterized in that** the heating elements (5, 6) are horizontally and/or vertically movable and positionable by means of servomotors (25), in particular **in that** the two heating elements (5, 6) are movable relative to one another and/or in the direction from the inner corner to the outer corner, and/or from the outer corner to the inner corner, of the joined profiles (1).

13. Device (10) according to Claim 11 or 12, **characterized in that**, on each heating element (5, 6), there is arranged in each case one cutting blade (7, 8) with preferably multiple cutting edges (16), wherein a lower cutting blade (7) is preferably assigned to the lower visible surface (17) of the profile end (2, 3) and an upper cutting blade (8) is preferably assigned to the upper visible surface (18).

14. Device (10) according to Claims 11 to 13, **characterized in that** the heating elements (5, 6) are provided with coated, preferably Teflon-coated, corrugated or toothed heating surfaces (23, 24), in particular on both sides.

15. Device (10) according to one of Claims 11 to 14, **characterized in that** the tool (7, 8) is heated, in particular by means of the heating unit (4).

## Revendications

1. Procédé de soudage d'au moins deux profilés (1) pour cadres ou battants de fenêtres ou de portes, avec les étapes suivantes :
- la fourniture d'au moins deux profilés (1) qui sont reliés l'un à l'autre au niveau de surfaces d'assemblage (26, 27) des extrémités de profilé (2, 3),
- le positionnement d'une unité de chauffage (4) avec au moins deux éléments chauffants (5, 6) entre les extrémités de profilé (2, 3) à assembler,
- le chanfreinage, notamment l'enlèvement, d'une couche de bord de profilé (20) des extrémités de profilé (2, 3), de préférence au moins jusqu'à la course de fusion, le long de leurs surfaces visibles (17, 18) au moyen d'au moins un outil agencé sur les éléments chauffants (5, 6) de l'unité de chauffage (4), notamment au moyen d'au moins une lame de coupe (7, 8),
- l'amenée des extrémités de profilé (2, 3) à assembler sur l'unité de chauffage (4),
- la fusion des extrémités de profilé (2, 3) sur leurs surfaces d'assemblage ultérieures (26, 27) au moyen d'au moins une surface de chauffage (23, 24) agencée sur les éléments chauffants (5, 6),
- le déplacement des éléments chauffants (5, 6) de telle sorte que la matière en fusion (9) est refoulée à l'intérieur du profilé (11) ou à l'intérieur (12) des chambres de profilé (13) du profilé (1),
- le retrait de l'unité de chauffage (4) entre les extrémités de profilé à assembler (2, 3) et
- la compression des extrémités de profilé (2, 3) l'une contre l'autre, de telle sorte que les profilés (1) sont assemblés entre eux.

2. Procédé selon la revendication 1, **caractérisé en ce qu'**un déplacement relatif entre chaque élément chauffant (5, 6) et au moins une surface d'assemblage (26, 27) est effectué dans un plan d'assemblage (F) qui est essentiellement parallèle à l'au moins une surface d'assemblage (26, 27).

3. Procédé selon la revendication 1 ou 2, **caractérisé en ce que** les deux éléments chauffants (5, 6) de l'unité de chauffage (4) sont déplacés et positionnés horizontalement et/ou verticalement, notamment **en ce que** les deux éléments chauffants (5, 6) sont déplacés l'un par rapport à l'autre et/ou dans la direction allant du coin intérieur au coin extérieur et/ou du coin extérieur au coin intérieur des profilés assemblés (1).

4. Procédé selon l'une quelconque des revendications 1 à 3, **caractérisé en ce que** chaque élément chauffant (5, 6) présente au moins deux surfaces chauffantes (23, 24) associées chacune à une surface d'assemblage (26, 27) d'une extrémité de profilé (2, 3) à assembler.

5. Procédé selon l'une quelconque des revendications précédentes, **caractérisé en ce que** le déplacement horizontal et/ou le déplacement vertical de chaque élément chauffant (5, 6) sont commandés indépendamment.

6. Procédé selon l'une quelconque des revendications précédentes, **caractérisé en ce qu'**une lame de coupe (7, 8) avec de préférence plusieurs tranchants (16) est agencée sur chaque élément chauffant (5, 6), une lame de coupe inférieure (7) étant de préférence associée à la surface visible inférieure (17) de l'extrémité de profilé (2, 3) et une lame de coupe supérieure (8) étant de préférence associée à la surface visible supérieure (18).

7. Procédé selon l'une quelconque des revendications précédentes, **caractérisé en ce que** la profondeur d'enlèvement (19) du revêtement ou de la couche de bord de profilé (20) enlevé(e) sur le profilé (1), vu dans la direction de l'onglet (21), possède au moins la même mesure que la course finale de fusion (31) lors du processus de fusion.

8. Procédé selon l'une quelconque des revendications précédentes, **caractérisé en ce que** la couche de bord de profilé (20) est enlevée jusqu'à une ligne de zone de séparation (32) et une ligne de point final d'assemblage (33) caractérise la zone jusqu'à laquelle le profilé (1) est comprimé sur sa paroi de profilé (28) pendant l'étape d'assemblage et le profilé (1) est fondu jusqu'à une ligne de point final de fusion (31) et dans lequel la ligne de zone de séparation (32) et la ligne de point final de fusion (31) ou la ligne de zone de séparation (32) et la ligne de point final d'assemblage (33) coïncident ou la ligne de zone de séparation (32) se situe entre la ligne de point final de fusion (31) et la ligne de point final d'assemblage (33).

9. Procédé selon l'une quelconque des revendications précédentes, **caractérisé en ce que** la lame de coupe (7, 8) est chauffée, notamment au moyen de l'unité de chauffage (4).

10. Procédé selon l'une quelconque des revendications précédentes, **caractérisé en ce que** les éléments chauffants (5, 6) sont équipés de plaques chauffantes (23, 24) revêtues, de préférence téflonisées, striées et/ou dentées, notamment sur les deux côtés.

11. Dispositif (10) pour le soudage d'au moins deux profilés (1) pour cadres ou battants de fenêtres ou de portes, notamment pour la mise en œuvre d'un procédé selon l'une quelconque des revendications 1 à 10, avec une unité de chauffage (4) pouvant être introduite entre les extrémités de profilé (2, 3) à assembler, avec au moins deux éléments de chauffage (5, 6) pour faire fondre les extrémités de profilé (2, 3) sur leurs surfaces d'assemblage ultérieures, dans lequel, pour le chanfreinage, notamment l'enlèvement, d'une couche de bord de profilé (20) des extrémités de profilé (2, 3) le long de leurs surfaces visibles (17, 18), il est prévu au moins un outil agencé sur les éléments chauffants (5, 6) de l'unité de chauffage (4), notamment au moins une lame de coupe (7, 8), les éléments chauffants (5, 6) pouvant être déplacés de telle sorte que la matière en fusion (9) est refoulée à l'intérieur du profilé (11) ou à l'intérieur (12) des chambres de profilé (13), un dispositif de compression étant prévu pour comprimer les extrémités de profilé (2, 3).

12. Dispositif (10) selon la revendication 11, **caractérisé en ce que** les éléments chauffants (5, 6) peuvent être déplacés et positionnés horizontalement et/ou verticalement au moyen de servomoteurs (25), notamment **en ce que** les deux éléments chauffants (5, 6) peuvent être déplacés l'un par rapport à l'autre et/ou dans la direction allant du coin intérieur vers le coin extérieur et/ou du coin extérieur vers le coin intérieur des profilés assemblés (1).

13. Dispositif (10) selon la revendication 11 ou 12, **caractérisé en ce qu'**une lame de coupe (7, 8) avec de préférence plusieurs tranchants (16) est agencée sur chaque élément chauffant (5, 6), une lame de coupe inférieure (7) étant de préférence associée à la surface visible inférieure (17) de l'extrémité de profilé (2, 3) et une lame de coupe supérieure (8) étant de préférence associée à la surface visible supérieure (18).

14. Dispositif (10) selon les revendications 11 à 13, **caractérisé en ce que** les éléments chauffants (5, 6) sont équipés de surfaces chauffantes (23, 24) revêtues, de préférence téflonisées, striées ou dentées, notamment des deux côtés.

15. Dispositif (10) selon l'une quelconque des revendications 11 à 14, **caractérisé en ce que** l'outil (7, 8) est chauffé, notamment au moyen de l'unité de chauffage (4).
